# EUROPEAN PATENT SPECIFICATION

(11) **EP 3 317 343 B1**
(45) Date of publication and mention of the grant of the patent: **02.08.2023**
(21) Application number: 16818688.0
(22) Date of filing: 29.06.2016
(51) Int. Cl.: B32B 9/02, B32B 9/04, C08L 3/00, C08L 3/02, C08L 23/00, C08J 5/18, C08L 101/16, C08L 23/06, C08L 23/08, B29L 31/00, B29L 7/00

(54) **ARTICLES FORMED WITH BIODEGRADABLE MATERIALS AND PROCESS**
AUS BIOLOGISCH ABBAUBAREN MATERIALIEN HERGESTELLTE ARTIKEL UND VERFAHREN
OBJETS FORMÉS AVEC DES MATÉRIAUX BIODÉGRADABLES ET PROCÉDÉ

(30) Priority: 30.06.2015 US 201562187231 P; 14.09.2015 US 201514853780
(43) Date of publication of application: 09.05.2018
(73) Proprietor: Biologiq, Inc., Idaho Falls, ID 83402 (US)
(72) Inventor: LAPRAY, Bradford, Idaho Falls, ID 83402 (US); QUAN, Wenji, Idaho Falls, ID 83402 (US)
(74) Representative: D Young & Co LLP
(86) International application number: PCT/US2016/040104
(87) International publication number: WO 2017/004210

(56) References cited:
- EP-A1- 2 762 307
- WO-A1-2014/089321
- WO-A1-2014/190395
- WO-A1-2014/190395
- CN-A- 102 850 626
- GB-A- 2 272 699
- US-A- 4 016 117
- US-A- 5 449 708
- US-A1- 2009 048 368
- C. S. TENA-SALCIDO ET AL: "Effect of Morphology on the Biodegradation of Thermoplastic Starch in LDPE/TPS Blends", POLYMER BULLETIN., vol. 60, no. 5, 30 January 2008 (2008-01-30), pages 677-688, XP055545481, DE ISSN: 0170-0839, DOI: 10.1007/s00289-008-0903-0

## Description

### BACKGROUND

Traditional petrochemical-based plastics are formulated to be strong, light-weight, and durable. However, these plastics are typically not biodegradable, and as a result, hundreds of millions of tons of plastic sits in landfills or floats in the ocean. In trying to reduce the amount of plastic waste, some articles typically produced using petrochemical-based plastics are being produced using biodegradable materials. C. S. Tena-Salcido et al (Polymer Bulletin, 60, 5, 2008, pp. 677-688) discloses blends comprising thermoplastic starch (TPS) and low density polyethylene. The influence of the starch content and LDPE viscosity on morphology, biodegradation and tensile properties of LDPE/TPS blends are evaluated therein.

EP 2762307A1 discloses a biodegradable stretch film product having consistent stretchability (elasticity). The film contains a resin blend (A+B), which is produced by blending polyester biodegradable resin (A) and polyethylene (B), that further contains a starch or a starch derivative.

US 4016117A discloses a biodegradable composition comprising a synthetic resin, a biodegradable granular filler such as natural starch and a substance autoxidizable to yield a peroxide which attacks the carbon to carbon linkages in the resin.

GB 2272699A teaches a biodegradable film prepared by chemical bonding of starch and polyethylene chains using a coupling agent such as maleic anhydride, methacrylic anhydride or maleimide which bonds with the starch and polyethylene WO 2014/089321A1 discloses a process for making a starch based resin from a starch-based plant feed stock. The process comprises extracting starch content from prepared feed stock, preparing a dried starch from the extracted starch content that may be polymerized in a reactor with a petroleum-based plastic resin, and partially crosslinking the polymerized starch with a petroleum-based plastic resin to form a starch-based resin. The starch-based resin may be used to produce film and bag products that have unique degradation properties.

WO 2014/190395A1 discloses a polymer film having a multilayer structure, the multilayer structure comprising an inner polymer layer interposed between first and second outermost polymer layers. The inner polymer layer comprises a melt blend of (a) a starch containing polymer composition comprising polyethylene, thermoplastic starch, and one or more compatibilisers.

### SUMMARY

This disclosure is directed to articles that are formed with biodegradable materials. In particular, the disclosure describes strength characteristics and biodegradability of the articles formed with the biodegradable materials. Processes to produce the articles with biodegradable materials are also described. The articles of the invention are produced from a mixture of materials having a polymeric content comprising one or more petrochemical-based polymeric materials selected from the group consisting of a polyolefin, polystyrene, high impact polystyrene, and combinations thereof, the petrochemical-based polymeric material being present in an amount of up to 99% by weight of the mixture of materials and a starch-based polymeric material formed from at least a first starch and a second starch, and a plasticizer, and including no greater than 5% by weight water, wherein an amount of the polymeric content that biodegrades after 91 days is greater than an amount of the first starch and the second starch based on results of a biomethane potential test conducted according to ASTM D5511 at a temperature of 52°C using an inoculum having 55% by weight water and 45% by weight organic solids. Optionally, a compatibilizer can also be used to form the articles.

In an implementation, a process to produce an article includes providing one or more petrochemical-based polymeric materials selected from the group consisting of a polyolefin, polystyrene, high impact polystyrene, and combinations thereof; providing one or more starch-based polymeric materials formed from at least a first starch and a second starch and a plasticizer, and including no greater than 5% by weight water;
mixing the one or more petrochemical-based polymeric materials and the one or more starch-based polymeric materials to produce a mixture of materials, the one or more petrochemical-based polymeric materials being present in an amount of up to 99% by weight of the mixture of materials;
heating the mixture of materials at a temperature included in a range of 120°C to 180°C;
producing a film using the mixture of materials, wherein:
   the film includes polymeric content comprised of the one or more petrochemical-based polymeric materials and the one or more starch-based polymeric materials; and
   an amount of the polymeric content that biodegrades after 91 days is greater than an amount of the one or more starches based on results of a biomethane potential test conducted according to ASTM D5511 at a temperature of 52°C using an inoculum having 55% by weight water and 45% by weight organic solids. The resulting mixture can be extruded into a number of plastic products using plastics processing equipment, such as injection molders, blow molders, thermoformers, etc., and a gas can be injected into the extruded mixture to form a film. Optionally, the extruded film can then be processed into a bag or another type of article.

### BRIEF DESCRIPTION OF THE DRAWINGS

The detailed description is described with reference to the accompanying figures. In the figures, the left-most digit(s) of a reference number identifies the figure in which the reference number first appears. The same reference numbers in different figures generally indicates similar or identical items.
FIG. 1 illustrates a flow diagram of an example process of forming an article including biodegradable materials.
FIG. 2 illustrates components of an example manufacturing system to produce articles including biodegradable materials.
FIG. 3A and FIG. 3B illustrate percent biodegradation measured over 32 days according to biomethane potential testing of four samples formed according to techniques described herein.
FIG. 4A and FIG. 4B illustrate percent biodegradation measured over 32 days according to biomethane potential testing of three additional samples formed according to techniques described herein.
FIG. 5A and FIG. 5B illustrate percent biodegradation measured over 91 days according to biomethane potential testing of four samples formed according to techniques described herein.
FIG. 6A and FIG. 6B illustrate percent biodegradation measured over 91 days according to biomethane potential testing of three additional samples formed according to techniques described herein.
FIG. 7A and FIG. 7B illustrate percent biodegradation measured over 71 days according to biomethane potential testing of one sample formed according to techniques described herein.
FIG. 8A and FIG. 8B show the results of the biodegradation portion of the ASTM D6400 test performed according to ASTM D5338 for a first sample and a second sample formed according to techniques described herein.
FIG. 9A and FIG. 9B show the results of the biodegradation portion of the ASTM D6400 test performed according to ASTM D5338 for a third sample and a fourth sample formed according to techniques described herein.
FIG. 10 shows the results of the phytotoxicity portion of the ASTM D6400 test for a first sample formed according to techniques described herein.
FIG. 11 shows the results of the phytotoxicity portion of the ASTM D6400 test for a second sample formed according to techniques described herein.
FIG. 12 shows the results of the phytotoxicity portion of the ASTM D6400 test for a third sample formed according to techniques described herein.
FIG. 13 shows the results of the phytotoxicity portion of the ASTM D6400 test for a fourth sample formed according to techniques described herein.
FIG. 14A and FIG. 14B show the results of the elemental analysis portion of the ASTM D6400 test based on Table 3 of 40 Code of Federal Regulations (C.F.R.) Part 503.13 for a first sample and a second sample formed according to techniques described herein.
FIG. 15A and FIG. 15B show the results of the elemental analysis portion of the ASTM D6400 test based on Table 3 of 40 C.F.R. Part 503.13 for a third sample and a fourth sample formed according to techniques described herein.

### DETAILED DESCRIPTION

The present disclosure is directed to, among other things, articles that are formed from biodegradable materials, as well as systems and processes to produce such articles. The articles of the present disclosure include a starch-based polymeric material formed from at least a first starch and a second starch, and a plasticizer, and including no greater than 5% by weight water; and a petrochemical-based polymeric material selected from the group consisting of a polyolefin, polystyrene, high impact polystyrene, and combinations thereof, the petrochemical-based polymeric material being present in an amount of up to 99% by weight of the mixture of materials, wherein an amount of the polymeric content that biodegrades after 91 days is greater than an amount of the first starch and the second starch based on results of a biomethane potential test conducted according to ASTM D5511 at a temperature of 52°C using an inoculum having 55% by weight water and 45% by weight organic solids. In an implementation, articles can be formed by mixing the starch-based polymeric material and the petrochemical-based material, heating the mixture, and extruding the mixture.

The articles described herein can be produced in the form of films and bags, which are made using blown film equipment along with other articles that are produced using injection molding, blow molding, thermoforming, and other plastic manufacturing processes. "Film," as used herein, refers to a thin continuous article that includes one or more polymeric materials that can be used to separate areas or volumes, to hold items, to act as a barrier, and/or as a printable surface. "Bag," as used herein, refers to a container made of a relatively thin, flexible film that can be used for containing and/or transporting goods.

The techniques and processes described herein can be implemented in a number of ways. Example implementations are provided below with reference to the following figures.

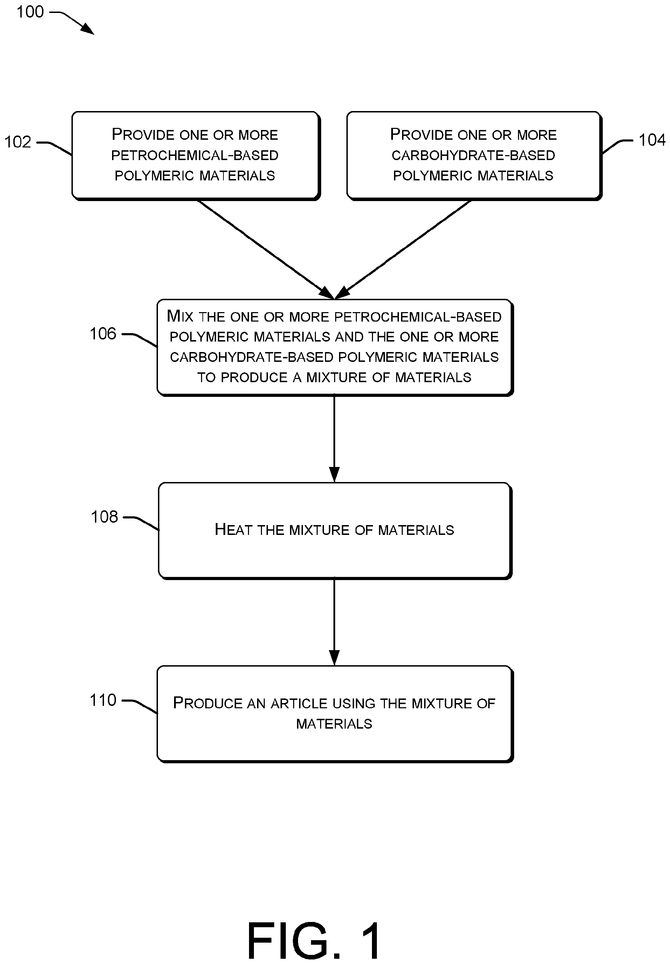

FIG. 1 illustrates an example process 100 of manufacturing an article including biodegradable materials. At 102, the process 100 includes providing a petrochemical-based polymeric material selected from the group consisting of a polyolefin, polystyrene, high impact polystyrene, and combinations thereof,. In addition, at 104, the process 100 includes providing a starch-based polymeric material formed from at least a first starch and a second starch. The starch-based polymeric materials and the petrochemical-based polymeric materials can be provided in a particular form, such as pellets, powders, nurdles, slurry, and/or liquids. In specific embodiments, pellets can be used.

In addition, providing the one or more petrochemical-based polymeric materials and the one or more starch-based polymeric materials can include feeding the one or more petrochemical-based polymeric materials and the one or more starch-based polymeric materials into an extruder. For example, the one or more starch-based polymeric materials and the one or more petrochemical-based polymeric materials can be fed into one or more hoppers of an extruder. In some cases, the one or more starch-based polymeric materials and the one or more petrochemical-based polymeric materials can be fed into the extruder at approximately the same time. In other situations, the one or more starch-based polymeric materials and the one or more petrochemical-based polymeric materials can be fed into the extruder at different times. Furthermore, the one or more starch-based polymeric materials and the one or more petrochemical-based polymeric materials can be fed into a chamber of the extruder. In an implementation, the one or more starch-based polymeric materials and the one or more petrochemical-based polymeric materials can be fed into the same chamber of the extruder. In another implementation, the one or more starch-based polymeric materials and the one or more petrochemical-based polymeric materials can be fed into different chambers of the extruder.

The petrochemical-based polymeric material is selected from the group consisting of a polyolefin, polystyrene, high impact polystyrene, and combinations thereof, the petrochemical-based polymeric material being present in an amount of up to 99% by weight of the mixture of materials For example, the petrochemical-based polymeric materials can include a polyethylene (PE), a polypropylene (PP), a polystyrene (PS), a high impact polystyrene (HIPS), a polymethylpentene, a polybutene, or combinations thereof. In various embodiments, the petrochemical based polymeric materials can include an ultra-high-molecular-weight polyethylene (UHMWPE), an ultra-low-molecular-weight polyethylene (ULMWPE), a high-molecular-weight polyethylene (HMWPE), a high-density polyethylene (HDPE), a high-density cross-linked polyethylene (HDXLPE), a cross-linked polyethylene (PEX or XLPE), a medium-density polyethylene (MDPE), a linear low-density polyethylene (LLDPE), a low-density polyethylene (LDPE), or a very-low-density polyethylene (VLDPE). In specific embodiments, the petrochemical-based polymeric materials can include a LLDPE. In some cases, a LLDPE can be formed using a metallocene catalyst.

The one or more starch-based polymeric materials are formed from at least a first starch and a second starch. For example, the starches can be produced from one or more plants, such as corn starch, tapioca starch, cassava starch, wheat starch, potato starch, rice starch and sorghum starch. In various embodiments, the starch-based polymers can include a mixture of starches derived from two or more plants, three or more plants, or four or more plants. The one or more starch-based polymeric materials also includes a plasticizer. Additionally, the starch-based polymeric material includes no greater than 5% by weight water.

In an implementation, the one or more starch-based polymeric materials can include at least about 65% by weight of starches, at least about 70% by weight of starches, at least about 75% by weight of starches, or at least about 80% by weight of starches. In addition, the one or more starch-based polymeric materials can include no greater than about 99% by weight of starches, no greater than about 95% by weight of starches, no greater than about 90% by weight of starches, or no greater than about 85% by weight of starches. In an illustrative example, the one or more starch-based polymeric materials can include from about 60% by weight to about 99% by weight of starches. In another illustrative example, the one or more starch-based polymeric materials can include from about 65% by weight to about 80% by weight of starches.

In some embodiments, a starch can be present in a mixture of starches at an amount of at least about 5% by weight, at least about 10% by weight, at least about 15% by weight, at least about 20% by weight, at least about 25% by weight, at least about 30% by weight, at least about 35% by weight, or at least about 40% by weight. In addition, a starch can be present in a mixture of starches at an amount no greater than about 95% by weight, no greater than about 90% by weight, no greater than about 85% by weight, no greater than about 80% by weight, no greater than about 75% by weight, no greater than about 70% by weight, no greater than about 65% by weight, no greater than about 60% by weight, no greater than about 55% by weight, or no greater than about 50% by weight. In some embodiments, a starch can be present in a mixture of starches in an amount from about 20% by weight to about 25% by weight, from about 30% by weight to about 35% by weight, from about 45% by weight to about 55% by weight, or from about 70% by weight to about 80% by weight.

The one or more starch-based polymeric materials is formed from a first starch and a second starch and a plasticizer, and including no greater than 5% by weight water. In these cases, the starch-based polymeric material can include at least about 50% by weight of the first starch, at least about 55% by weight of the first starch, at least about 60% by weight of the first starch, at least about 65% by weight of the first starch, or at least about 70% by weight of the first starch. Additionally, the starch-based polymeric material can include no greater than about 95% by weight of the first starch, no greater than about 90% by weight of the first starch, no greater than about 85% by weight of the first starch, no greater than about 80% by weight of the first starch, or no greater than about 75% by weight of the first starch. In an illustrative example, the starch-based polymeric material can include from about 50% by weight to about 98% by weight of the first starch. In another illustrative example, the starch-based polymeric material can include from about 55% by weight to about 85% by weight of the first starch. In an additional illustrative example, the starch-based polymeric material can include from about 55% by weight to about 70% by weight of the first starch. In a further illustrative example, the starch-based polymeric material can include from about 75% by weight to about 90% by weight of the first starch. Also, the starch-based polymeric material can include from about 65% by weight to about 75% by weight of the first starch.

With regard to the second starch included in a starch-based material having a mixture of a first starch and a second starch, the starch-based polymeric material can include at least about 5% by weight of the second starch, at least about 10% by weight of the second starch, at least about 15% by weight of the second starch, at least about 20% by weight of the second starch, or at least about 25% by weight of the second starch. Additionally, the starch-based polymeric material can include no greater than about 50% by weight of the second starch, no greater than about 45% by weight of the second starch, no greater than about 40% by weight of the second starch, no greater than about 35% by weight of the second starch, or no greater than about 30% by weight of the second starch. In an illustrative example, the starch-based polymeric material can include from about 2% by weight to about 50% by weight of the second starch. In another illustrative example, the starch-based polymeric material can include from about 10% by weight to about 45% by weight of the second starch. In an additional illustrative example, the starch-based polymeric material can include from about 15% by weight to about 25% by weight of the second starch. In a further illustrative example, the starch-based polymeric material can include from about 35% by weight to about 45% by weight of the second starch. Also, the starch-based polymeric material can include from about 25% by weight to about 35% by weight of the second starch.

In some implementations, the one or more starch-based polymeric materials can include a mixture of a first starch, a second starch, and a third starch. For example, the starch-based polymeric material can include at least about 30% by weight of the first starch, at least about 35% by weight of the first starch, at least about 45% by weight of the first starch, at least about 50% by weight of the first starch, or at least about 55% by weight of the first starch. In addition, the starch-based polymeric material can include no greater than about 80% by weight of the first starch, no greater than about 75% by weight of the first starch, no greater than about 70% by weight of the first starch, no greater than about 65% by weight of the first starch, or no greater than about 60% by weight of the first starch. In an illustrative example, the starch-based material can include from about 30% by weight to about 80% by weight of the first starch. In another illustrative example, the starch-based material can include from about 30% by weight to about 40% by weight of the first starch. In an additional illustrative example, the starch-based material can include from about 45% by weight to about 55% by weight of the first starch. In a further illustrative example, the starch-based material can include from about 55% by weight to about 65% by weight of the first starch. Additionally, in a starch-based polymeric material that includes a mixture of a first starch, a second starch, and a third starch, the starch-based polymeric material can include at least about 5% by weight of the second starch, at least about 10% by weight of the second starch, at least about 15% by weight of the second starch, or at least about 20% by weight of the second starch. In an implementation, the starch-based polymeric material can include no greater than about 40% by weight of the second starch, no greater than about 35% by weight of the second starch, no greater than about 30% by weight of the second starch, or no greater than about 25% by weight of the second starch. In an illustrative example, the starch-based polymeric material can include from about 5% by weight to about 40% by weight of the second starch. In another illustrative example, the starch-based polymeric material can include from about 15% by weight to about 25% by weight of the second starch. In an additional illustrative example, the starch-based polymeric material can include from about 27% by weight to about 38% by weight of the second starch.

Further, when the starch-based polymeric material includes a mixture of a first starch, a second starch, and a third starch, the starch-based polymeric material can include at least about 5% by weight of the third starch, at least about 10% by weight of the third starch, at least about 15% by weight of the third starch, or at least about 20% by weight of the third starch. In an implementation, the starch-based polymeric material can include no greater than about 40% by weight of the third starch, no greater than about 35% by weight of the third starch, no greater than about 30% by weight of the third starch, or no greater than about 25% by weight of the third starch. In an illustrative example, the starch-based polymeric material can include from about 5% by weight to about 40% by weight of the third starch. In another illustrative example, the starch-based polymeric material can include from about 15% by weight to about 25% by weight of the third starch. In an additional illustrative example, the starch-based polymeric material can include from about 27% by weight to about 38% by weight of the third starch.

A plasticizer included in the one or more starch-based polymeric materials can include polyethylene glycol, sorbitol, glycerin, polyhydric alcohol plasticizers, hydrogen bond forming organic compounds which do not have a hydroxyl group, anhydrides of sugar alcohols, animal proteins, vegetable proteins, aliphatic acids, phthalate esters, dimethyl and diethylsuccinate and related esters, glycerol triacetate, glycerol mono and diacetates, glycerol mono, di, and tripropionates, butanoates, stearates, lactic acid esters, citric acid esters, adipic acid esters, stearic acid esters, oleic acid esters, other acid esters, or combinations thereof. In specific implementations, the one or more starch-based polymeric materials can include glycerin.

In an implementation, the one or more starch-based polymeric materials can include at least about 12% by weight of a plasticizer, at least about 15% by weight of a plasticizer, at least about 18% by weight of a plasticizer, at least about 20% by weight of a plasticizer, or at least about 22% by weight of a plasticizer. Additionally, the one or more starch-based polymeric materials can include no greater than about 35% by weight of a plasticizer, no greater than about 32% by weight of a plasticizer, no greater than about 30% by weight of a plasticizer, no greater than about 28% by weight of a plasticizer, or no greater than about 25% by weight of a plasticizer. In an illustrative example, the one or more starch-based polymeric materials can include from about 12% by weight to about 35% by weight of a plasticizer. In another illustrative example, the one or more starch-based polymeric materials can include from about 15% by weight to about 30% by weight of a plasticizer. In an additional illustrative example, the one or more starch-based polymeric materials can include from about 18% by weight to about 28% by weight of a plasticizer.

The one or more starch-based polymeric materials include no greater than about 5% by weight water, no greater than about 4% by weight water, no greater than about 3% by weight water, no greater than about 2% by weight water, or no greater than about 1% by weight water. Additionally, the one or more starch-based polymeric materials can include at least about 0.1% by weight water, at least about 0.3% by weight water, at least about 0.6% by weight water, or at least about 0.8% by weight water. In an illustrative example, the one or more starch-based polymeric materials include from about 0.1% by weight to about 5% by weight water. In another illustrative example, the one or more starch-based polymeric materials include from about 0.4% by weight to about 2% by weight water. In an additional illustrative example, the one or more starch-based polymeric materials can include from about 0.5% by weight to about 1.5% by weight water.

At 106, the process 100 includes mixing the one or more petrochemical-based polymeric materials and the one or more starch-based polymeric materials to produce a mixture of materials. In some cases, the mixing of the one or more petrochemical-based polymeric materials and the one or more starch-based materials can be performed using one or more mixing devices. In a particular implementation, a mechanical mixing device can be used to mix the one or more petrochemical-based polymeric materials and the one or more starch-based polymeric materials. In an implementation, at least a portion of the components of the mixture of the materials can be combined in an apparatus, such as an extruder. In other implementations, at least a portion of the components of the mixture of the materials can be combined before being fed into the extruder.

In various implementations, the one or more starch-based polymeric materials can be present in the mixture of materials in an amount of at least about 5% by weight of the mixture of materials, at least about 10% by weight of the mixture of materials, at least about 15% by weight of the mixture of materials, at least about 20% by weight of the mixture of materials, at least about 25% by weight of the mixture of materials, at least about 30% by weight of the materials, at least about 35% by weight of the mixture of materials, at least about 40% by weight of the mixture of materials, or at least about 45% by weight of the mixture of materials. In other implementations, the one or more starch-based polymeric materials can be present in the mixture of materials in an amount of no greater than about 99% by weight of the mixture of materials, no greater than about 95% by weight of the mixture of materials, no greater than about 90% by weight of the mixture of materials, no greater than about 80% by weight of the mixture of materials, no greater than about 70% by weight of the mixture of materials, no greater than about 60% by weight of the mixture of materials, or no greater than about 50% by weight of the mixture of materials. Additionally, the one or more starch-based polymeric materials can be present in the mixture of materials in an amount from about 20% by weight to about 40% by weight of the mixture of materials. In an illustrative example, the mixture of materials can include from about 2% by weight to about 98% by weight of the one or more starch-based polymeric materials. In another illustrative example, the mixture of materials can include from about 10% by weight to about 40% by weight of the one or more starch-based polymeric materials. In an additional illustrative example, the mixture of materials can include from about 20% by weight to about 30% by weight of the one or more starch-based polymeric materials. In a further illustrative example, the mixture of materials can include from about 50% by weight to about 80% by weight of the one or more starch-based polymeric materials. In still another illustrative example the mixture of materials can include from about 40% by weight to about 60% by weight of the one or more starch-based polymeric materials.

In some implementations, the mixture of materials can include at least about 10% by weight of the one or more petrochemical-based polymeric materials, at least about 15% by weight of the one or more petrochemical-based polymeric materials, at least about 20% by weight of the one or more petrochemical-based polymeric materials, at least about 25% by weight of the one or more petrochemical-based polymeric materials, at least about 30% by weight of the one or more petrochemical-based polymeric materials, at least about 35% by weight of the one or more petrochemical-based polymeric materials, at least about 40% by weight of the one or more petrochemical-based polymeric materials, at least about 45% by weight of the one or more petrochemical-based polymeric materials, or at least about 50% by weight of the one or more petrochemical-based polymeric materials. In addition, the mixture of materials includes no greater than about 99% by weight of the one or more petrochemical-based polymeric materials, no greater than about 95% by weight of the one or more petrochemical-based polymeric materials, no greater than about 90% by weight of the one or more petrochemical-based polymeric materials, no greater than about 85% by weight of the one or more petrochemical-based polymeric materials, no greater than about 80% by weight of the one or more petrochemical-based polymeric materials, no greater than about 75% by weight of the one or more petrochemical-based polymeric materials, no greater than about 70% by weight of the one or more petrochemical-based polymeric materials, no greater than about 65% by weight of the one or more petrochemical-based polymeric materials, or no greater than about 60% by weight of the one or more petrochemical-based polymeric materials. In an illustrative example, the mixture of materials can include from about 2% by weight to about 98% by weight of the one or more petrochemical-based polymeric materials. In another illustrative example, the mixture of materials can include from about 50% by weight to about 90% by weight of the one or more petrochemical-based polymeric materials. In an additional illustrative example, the mixture of materials can include from about 65% by weight to about 75% by weight of the one or more petrochemical-based polymeric materials. In a further illustrative example, the mixture of materials can include from about 20% by weight to about 50% by weight of the one or more petrochemical-based polymeric materials. In still another illustrative example, the mixture of materials can include from about 40% by weight to about 60% by weight of the one or more petrochemical-based polymeric materials.

In some cases, the mixture of materials can include a blend of a first petrochemical-based polymeric material and a second petrochemical based polymeric material, where the second petrochemical-based polymeric material can be compostable. That is, in some cases, the second petrochemical-based polymeric material can be compostable according to the ASTM D6400 standard at the time of filing of this patent application. In an implementation, when the mixture of materials includes a first petrochemical-based polymeric material and a second petrochemical-based polymeric material, the mixture of materials can include at least about 10% by weight of the first petrochemical-based polymeric material, at least about 15% by weight of the first petrochemical-based polymeric material, at least about 20% by weight of the first petrochemical-based polymeric material, or at least about 25% by weight of the first petrochemical-based polymeric material. Additionally, when the mixture of materials includes a first petrochemical-based polymeric material and a second petrochemical-based polymeric material, the mixture of materials can include no greater than about 50% by weight of the first petrochemical-based polymeric material, no greater than about 45% by weight of the first petrochemical-based polymeric material, no greater than about 40% by weight of the first petrochemical-based polymeric material, no greater than about 35% by weight of the first petrochemical-based polymeric material, or no greater than about 30% by weight of the first petrochemical-based polymeric material. In an illustrative example when the mixture of materials includes a first petrochemical-based polymeric material and a second petrochemical-based polymeric material, the mixture of materials can include from about 5% by weight to about 55% by weight of the first petrochemical-based polymeric material. In another illustrative example when the mixture of materials includes a first petrochemical-based polymeric material and a second petrochemical-based polymeric material, the mixture of materials can include from about 10% by weight to about 30% by weight of the first petrochemical-based polymeric material. In an additional illustrative example when the mixture of materials includes a first petrochemical-based polymeric material and a second petrochemical-based polymeric material, the mixture of materials can include from about 12% by weight to about 20% by weight of the first petrochemical-based polymeric material. In some instances, the first petrochemical-based polymeric material can include a polyethylene. To illustrate, the first petrochemical-based polymeric material can include a linear low density polyethylene. In some cases, the first petrochemical-based polymeric material may not be compostable according to the ASTM D6400 standard.

Furthermore, when the mixture of materials includes a first petrochemical-based polymeric material and a second petrochemical-based polymeric material, the mixture of materials can include at least about 25% by weight of the second petrochemical-based polymeric material, at least about 30% by weight of the second petrochemical-based polymeric material, at least about 35% by weight of the second petrochemical-based polymeric material, at least about 40% by weight of the second petrochemical-based polymeric material, or at least about 45% by weight of the second petrochemical-based polymeric material. Also, when the mixture of materials includes a first petrochemical-based polymeric material and a second petrochemical-based polymeric material, the mixture of materials can include no greater than about 75% by weight of the second petrochemical-based polymeric material, no greater than about 70% by weight of the second petrochemical-based polymeric material, no greater than about 65% by weight of the second petrochemical-based polymeric material, no greater than about 60% by weight of the second petrochemical-based polymeric material, no greater than about 55% by weight of the second petrochemical-based polymeric material, or no greater than about 50% by weight of the second petrochemical-based polymeric material. In an illustrative example when the mixture of materials includes a first petrochemical-based polymeric material and a second petrochemical-based polymeric material, the mixture of materials can include from about 20% by weight to about 80% by weight of the second petrochemical-based polymeric material. In another illustrative example when the mixture of materials includes a first petrochemical-based polymeric material and a second petrochemical-based polymeric material, the mixture of materials can include from about 35% by weight to about 60% by weight of the second petrochemical-based polymeric material. In an additional illustrative example when the mixture of materials includes a first petrochemical-based polymeric material and a second petrochemical-based polymeric material, the mixture of materials can include from about 45% by weight to about 55% by weight of the second petrochemical-based polymeric material.

In particular implementations when the mixture of materials includes a first petrochemical-based polymeric material and a second petrochemical-based polymeric material, the mixture of materials can include from about 5% by weight to about 25% by weight of the first petrochemical-based polymeric material and from about 40% by weight to about 60% by weight of the second petrochemical-based polymeric material. In other implementations when the mixture of materials includes a first petrochemical-based polymeric material and a second petrochemical-based polymeric material, the mixture of materials can include from about 10% by weight to about 20% by weight of the first petrochemical-based polymeric material and from about 45% by weigh to about 55% by weight of the second petrochemical-based polymeric material.

In some embodiments, a compatibilizer can also be present in the mixture of materials. In a particular implementation, a compatibilizer can be mixed with the one or more petrochemical-based polymeric materials and the one or more starch-based polymeric materials and be included in the mixture of materials. The compatibilizer can be a modified polyolefin, such as a maleic anhydride grafted polypropylene, a maleic anhydride grafted polyethylene, a maleic anhydride grafted polybutene, or a combination thereof. The compatibilizer can also include an acrylate-based co-polymer. For example, the compatibilizer can include an ethylene methyl acrylate co-polymer, an ethylene butyl-acrylate co-polymer, or an ethylene ethyl acrylate co-polymer. Additionally, the compatibilizer can include a poly(vinyl acetate)-based compatibilizer.

In an implementation, the mixture of materials can include at least about 0.5% by weight of a compatibilizer, at least about 1% by weight of a compatibilizer, at least about 2% by weight of a compatibilizer, at least about 3% by weight of a compatibilizer, at least about 4% by weight of a compatibilizer, or at least about 5% by weight of a compatibilizer. Additionally, the mixture of materials can include no greater than about 10% by weight of a compatibilizer, no greater than about 9% by weight of a compatibilizer, no greater than about 8% by weight of a compatibilizer, no greater than about 7% by weight of a compatibilizer, or no greater than about 6% by weight of a compatibilizer. In an illustrative example, the mixture of materials can include from about 0.5% by weight to about 12% by weight of a compatibilizer. In another illustrative example, the mixture of materials can include from about 2% by weight to about 7% by weight of a compatibilizer. In an additional illustrative example, the mixture of materials can include from about 4% by weight to about 6% by weight of a compatibilizer.

In other implementations, the mixture of materials can include at least about 0.5% by weight of a compatibilizer, at least about 3% by weight of a compatibilizer, at least about 10% by weight of a compatibilizer, at least about 15% by weight of a compatibilizer, at least about 20% by weight of a compatibilizer, or at least about 25% by weight of a compatibilizer. In addition, the mixture of materials can include no greater than about 50% by weight of a compatibilizer, no greater than about 45% by weight of a compatibilizer, no greater than about 40% by weight of a compatibilizer, no greater than about 35% by weight of a compatibilizer, or no greater than about 30% by weight of a compatibilizer. In an illustrative example, the mixture of materials can include from about 0.1% by weight to about 50% by weight of a compatibilizer. In another illustrative example, the mixture of materials can include from about 1% by weight to about 35% by weight of a compatibilizer. In an additional illustrative example, the mixture of materials can include from about 2% by weight to about 15% by weight of a compatibilizer. In a further illustrative example, the mixture of materials can include from about 3% by weight to about 7% by weight of a compatibilizer.

Furthermore, other additives can be included in the mixture of materials. For example, additives that aid in the biodegradation of an article can be included in the mixture of materials, such as Restore^{®} by Enso, EcoPure^{®} by Bio-Tec Environmental, ECM Masterbatch Pellets^{™} by ECM Biofilms, or Biodegradable 201 and/or Biodegradable 302 BioSphere^{®}. Also, other additives that improve strength characteristics of the article can be added to the mixture of materials. Additives such as Biomax^{®} Strong from Dupont can be used. In various embodiments, one or more additives can be included in the mixture of materials in an amount of at least about 0.5% by weight, at least about 1% by weight, at least about 1.5% by weight, at least about 2% by weight, at least about 2.5% by weight, at least about 3% by weight, or at least about 4% by weight. In further embodiments, one or more additives can be present in the mixture of materials in an amount of no greater than about 10% by weight, no greater than about 9% by weight, no greater than about 9% by weight, no greater than about 9% by weight, no greater than about 9% by weight, or no greater than about 5% by weight. In an illustrative example, one or more additives can be present in the mixture of materials in an amount from about 0.2% by weight to about 12% by weight. In another illustrative example, one or more additives can be present in the mixture of materials in an amount from about 1% by weight to about 10% by weight. In an additional example, one or more additives can be present in the mixture of materials in an amount from about 0.5% by weight to about 4% by weight. In a further illustrative example, one or more additives can be present in the mixture of materials in an amount from about 2% by weight to about 6% by weight.

At 108, the process 100 includes heating the mixture of materials. In the process of the present invention, the mixture of materials is heated at a temperature from about 120 °C to about 180 °C. In an additional illustrative example, the mixture of materials can be heated at a temperature from about 125 °C to about 165 °C.

The mixture of materials can be heated in one or more chambers of an extruder. In some cases, one or more chambers of the extruder can be heated at different temperatures. In other cases, one or more chambers of the extruder can be heated at substantially a same temperature. In various embodiments, the extruder can have at least one chamber, at least two chambers, at least three chambers, at least four chambers, at least five chambers, at least six chambers, at least seven chambers, at least eight chambers, at least nine chambers, or at least ten chambers. In other embodiments, the extruder can have one chamber, two chambers, three chambers, four chambers, five chambers, six chambers, seven chambers, eight chambers, nine chambers, or ten chambers. In further embodiments, the extruder can have less than three chambers, less than four chambers, less than five chambers, less than six chambers, less than seven chambers, less than eight chambers, less than nine chambers, or less than ten chambers.

The speed of one or more screws of the extruder can be at least about 10 rotations per minute (rpm), at least about 12 rpm, at least about 14 rpm, at least about 16 rpm, or at least about 18 rpm. Additionally, the speed of one or more screws of the extruder can be no greater than about 30 rpm, no greater than about 28 rpm, no greater than about 26 rpm, no greater than about 24 rpm, no greater than about 22 rpm, or no greater than about 20 rpm. In an illustrative example, the speed of one or more screws of the extruder can be from about 8 rpm to about 35 rpm. In another illustrative example, the speed of one or more screws of the extruder can be from about 12 rpm to about 25 rpm. In an additional illustrative example, the speed of one or more screws of the extruder can be from about 14 rpm to about 21 rpm.

At 110, an article is produced using the mixture of materials. In some cases, the article can include a film. In other cases, the article can be formed from a film. In still additional situations, the article can have a shape based on a design, such as a mold. In some cases, when the article is a film, the film can be formed using a dye and injecting a gas into the heated mixture of material to form the film. The film can then be molded and/or modified to be in the form of a bag or other article.

In an implementation, the article can have from about 10% by weight to about 95% by weight of one or more petrochemical-based polymeric materials, from about 20% by weight to about 80% by weight of one or more petrochemical-based polymeric materials, from about 30% by weight to about 70% by weight of one or more petrochemical-based polymeric materials, or from about 40% by weight to about 60% by weight of one or more petrochemical-based polymeric materials. In an illustrative example, the article can have from about 60% by weight to about 80% by weight of one or more petrochemical-based polymeric materials. In some cases, the article can include a mixture of a first petrochemical-based polymeric material and a second petrochemical-based polymeric material, where the second petrochemical-based polymeric material is compostable. In these situations, the article can include from about 5% by weight to about 30% by weight of the first petrochemical-based polymeric material and from about 35% by weight to about 60% by weight of the second petrochemical-based polymeric material. In another implementation, the article can include from about 10% by weight to about 20% by weight of the first petrochemical-based polymeric material and from about 45% by weight to about 55% by weight of the second petrochemical-based polymeric material.

Additionally, the article can have from about 10% by weight to about 98% by weight of one of more starch-based polymeric materials, from about 20% by weight to about 80% by weight of one or more starch-based polymeric materials, from about 30% by weight to about 70% by weight of one or more starch-based polymeric materials, or from about 40% by weight to about 60% by weight of one or more starch-based polymeric materials. In an illustrative example, the article can include from about 15% by weight to about 30% by weight of one or more starch-based polymeric materials. In another illustrative example, the article can include from about 10% by weight to about 25% by weight of one or more starch-based polymeric materials. In a particular implementation, the article can include at least about 95% by weight of one or more starch-based polymeric materials or at least about 99% by weight of one or more starch-based polymeric materials.

In embodiments where the article is a film, the film can be comprised of a single layer, in some cases, and multiple layers, in other cases. One or more layers of the film can have a thickness of at least about 0.01 mm, at least about 0.02 mm, at least about 0.03 mm, at least about 0.05 mm, at least about 0.07 mm, at least about 0.10 mm, at least 0.2 mm, at least about 0.5 mm, at least about 0.7 mm, at least about 1 mm, at least about 2 mm, or at least about 5 mm. Additionally, when the article is a film, one or more layers of the film can have a thickness of no greater than about 2 cm, no greater than about 1.5 cm, no greater than about 1 cm, no greater than about 0.5 cm, no greater than about 100 mm, no greater than about 80 mm, no greater than about 60 mm, no greater than about 40 mm, no greater than about 30 mm, no greater than about 20 mm, or no greater than about 10 mm. In an illustrative example, when the article is a film, one or more layers of the film can have a thickness from about 0.005 mm to about 3 cm. In another illustrative example, when the article is a film, one or more layers of the film can have a thickness from about 0.01 mm to about 1 mm. In an additional illustrative example, when the article is a film, one or more layers of the film can have a thickness from about 0.05 mm to about 0.5 mm. In a further illustrative example, when the article is a film, one or more layers of the film can have a thickness from about 0.02 mm to about 0.05 mm.

The article can have strength characteristics that are characterized through testing, such as a dart drop impact test (ASTM D1709), tensile strength at break test (ASTM D882), tensile elongation at break test (ASTM D882), a secant modulus test (ASTM D882), and an Elmendorf Tear test (ASTM D1922). In an implementation, the article can have a dart drop impact test value of at least about 150 g, at least about 175 g, at least about 200 g, at least about 225 g, at least about 250 g, at least about 275 g, or at least about 300 g. In another implementation, the article can have a dart drop impact test value of no greater than about 400 g, no greater than about 375 g, no greater than about 350 g, or no greater than about 325 g. In an illustrative implementation, the article can have a dart drop impact test value from about 140 g to about 425 g. In another illustrative implementation, the article can have a dart drop impact test value from about 200 g to about 400 g. In an additional illustrative example, the article can have a dart drop impact test value from about 250 g to about 350 g. In a further illustrative example, the article can have a dart drop impact test value from about 265 g to about 330 g.

In an implementation, the article can have a tensile strength at break test value in the machine direction of at least about 24131.7 kPa (3.5 kpsi), at least about 25510.6 kPa (3.7 kpsi), at least about 26889.6 kPa (3.9 kpsi), at least about 28268.5 kPa (4.1 kpsi), at least about 29647.5 kPa (4.3 kpsi), or at least about 31026.4 kPa (4.5 kpsi). In another implementation, the article can have a tensile strength at break test value in the machine direction of no greater than about 37921.2 kPa (5.5 kpsi), no greater than about 36542.2 kPa (5.3 kpsi), no greater than about 35163.3 kPa (5.1 kpsi), no greater than about 33784.3 kPa (4.9 kpsi), or no greater than about 32405.4 kPa (4.7 kpsi). In an illustrative example, the article can have a tensile strength at break test value in the machine direction from about 24131.7 kPa (3.5 kpsi) to about 37921.2 kPa (5.5 kpsi). In another illustrative example, the article can have a tensile strength at break test value in the machine direction from about 28268.5 kPa (4.1 kpsi) to about 33784.3 kPa (4.9 kpsi).

In an implementation, the article can have a tensile strength at break test value in the transverse direction of at least about 22063.2 kPa (3.2 kpsi), at least about 23442.2 kPa (3.4 kpsi), at least about 24821.1 kPa (3.6 kpsi), at least about 26200.1 kPa (3.8 kpsi), at least about 27579 kPa (4.0 kpsi), or at least about 28958 kPa (4.2 kpsi). In another implementation, the article can have a tensile strength at break test value in the transverse direction of no greater than about 39300.1 kPa (5.7 kpsi), no greater than about 37921.2 kPa (5.5 kpsi), no greater than about 36542.2 kPa (5.3 kpsi), no greater than about 35163.3 kPa (5.1 kpsi), no greater than about 33784.3 kPa (4.9 kpsi), no greater than about 32405.4 kPa (4.7 kpsi), or no greater than about 31026.4 kPa (4.5 kpsi). In an illustrative example, the article can have a tensile strength at break test value in the transverse direction from about 22063.2 kPa (3.2 kpsi) to about 39300.1 kPa (5.7 kpsi). In another illustrative example, the article can have a tensile strength at break test value in the transverse direction from about 24821.1 kPa (3.6 kpsi) to about 34473.8 kPa (5.0 kpsi).

In an implementation, the article can have a tensile elongation at break test value in the machine direction of at least about 550%, at least about 560%, at least about 570%, at least about 580%, at least about 590%, at least about 600%, at least about 610%, or at least about 620%. In another implementation, the article can have a tensile elongation at break test value in the machine direction of no greater than about 725%, no greater than about 710%, no greater than about 700%, no greater than about 680%, no greater than about 665%, no greater than about 650%, or no greater than about 635%. In an illustrative example, the article can have a tensile elongation at break test value in the machine direction from about 550% to about 750%. In another illustrative example, the article can have a tensile elongation at break test value in the machine direction from about 600% to about 660%.

In an implementation, the article can have a tensile elongation at break test value in the transverse direction of at least about 575%, at least about 590%, at least about 600%, at least about 615%, at least about 630%, or at least about 645%. In another implementation, the article can have a tensile elongation at break test value in the transverse direction of no greater than about 770%, no greater than about 755%, no greater than about 740%, no greater than about 725%, no greater than about 710%, no greater than about 695%, or no greater than about 680%. In an illustrative example, the article can have a tensile elongation at break test value in the transverse direction from about 575% to about 775%. In another illustrative example, the article can have a tensile elongation at break test value in the transverse direction from about 625% to about 700%.

In an implementation, the article can have an Elmendorf tear force test value in the machine direction of at least about 11023.6 g/mm (280 g/mil), at least about 11811 g/mm (300 g/mil), at least about 12598.4 g/mm (320 g/mil), at least about 13385.8 g/mm (340 g/mil), or at least about 14173.2 g/mm (360 g/mil). In another implementation, the article can have an Elmendorf tear force test value in the machine direction of no greater than about 17716.5 g/mm (450 g/mil), no greater than about 16929.1 g/mm (430 g/mil), no greater than about 16141.7 g/mm (410 g/mil), no greater than about 15354.3 g/mm (390 g/mil), or no greater than about 14566.9 g/mm (370 g/mil). In an illustrative example, the article can have an Elmendorf tear force test value in the machine direction from about 10826.8 g/mm (275 g/mil) to about 18700.8 g/mm (475 g/mil). In another illustrative example, the article can have an Elmendorf tear force test value in the machine direction from about 12795.3 g/mm (325 g/mil) to about 16141.7 g/mm (410 g/mil).

In an implementation, the article can have an Elmendorf tear force test value in the transverse direction of at least about 18700.8 g/mm (475 g/mil), at least about 19291.3 g/mm (490 g/mil), at least about 19685 g/mm (500 g/mil), at least about 20669.3 g/mm (525 g/mil), at least about 21259.8 g/mm (540 g/mil), or at least about 21653.5 g/mm (550 g/mil). In another implementation, the article can have an Elmendorf tear force test value in the transverse direction of no greater than about 27559.1 g/mm (700 g/mil), no greater than about 26771.7 g/mm (680 g/mil), no greater than about 25590.6 g/mm (650 g/mil), no greater than about 24606.3 g/mm (625 g/mil), no greater than about 23622 g/mm (600 g/mil), no greater than about 22834.6 g/mm (580 g/mil), or no greater than about 22440.9 g/mm (570 g/mil). In an illustrative example, the article can have an Elmendorf tear force test value in the transverse direction from about 18700.8 g/mm (475 g/mil) to about 28543.3 g/mm (725 g/mil). In another illustrative example, the article can have an Elmendorf tear force test value in the transverse direction from about 19291.3 g/mm (490 g/mil) to about 25196.9 g/mm (640 g/mil). In an implementation, the article can have a secant modulus of elasticity test value in the machine direction of at least about 137895 kPa (20 kpsi), at least about 151685 kPa (22 kpsi), at least about 165474 kPa (24 kpsi), at least about 179264 kPa (26 kpsi), at least about 193053 kPa (28 kpsi), or at least about 206843 kPa (30 kpsi). In another implementation, the article can have a secant modulus of elasticity test value in the machine direction of no greater than about 275790 kPa (40 kpsi), no greater than about 262001 kPa (38 kpsi), no greater than about 248211 kPa (36 kpsi), no greater than about 234422 kPa (34 kpsi), or no greater than about 220632 kPa (32 kpsi). In an illustrative example, the article can have a secant modulus of elasticity test value in the machine direction from about 137895 kPa (20 kpsi) to about 275790 kPa (40 kpsi). In another illustrative example, the article can have a secant modulus of elasticity test value in the machine direction from about 172369 kPa (25 kpsi) to about 241317 kPa (35 kpsi).

In an implementation, the article can have a secant modulus of elasticity test value in the transverse direction of at least about 137895 kPa (20 kpsi), at least about 151685 kPa (22 kpsi), at least about 165474 kPa (24 kpsi), at least about 179264 kPa (26 kpsi), at least about 193053 kPa (28 kpsi), or at least about 206843 kPa (30 kpsi). In another implementation, the article can have a secant modulus of elasticity test value in the transverse direction of no greater than about 275790 kPa (40 kpsi), no greater than about 262001 kPa (38 kpsi), no greater than about 248211 kPa (36 kpsi), no greater than about 234422 kPa (34 kpsi), or no greater than about 220632 kPa (32 kpsi). In an illustrative example, the article can have a secant modulus of elasticity test value in the transverse direction from about 137895 kPa (20 kpsi) to about 275790 kPa (40 kpsi). In another illustrative example, the article can have a secant modulus of elasticity test value in the transverse direction from about 172369 kPa (25 kpsi) to about 241317 kPa (35 kpsi).

In some cases, articles of the present invention formed from a mixture of two or more starches have values of strength properties that are greater than articles formed from a single starch. For example, an article including a mixture of two or more starches can have a dart drop impact test value that is at least about 110% greater than an article including a single starch, at least about 125% greater than an article including a single starch, at least about 150% greater than an article including a single starch, at least about 175% greater than an article including a single starch, or at least about 190% greater than an article including a single starch. In another example, an article including a mixture of two or more starches can have a dart drop impact test value that is no greater than at least about 250% greater than an article including a single starch, no greater than at least about 240% greater than an article including a single starch, no greater than at least about 230% greater than an article including a single starch, no greater than at least about 230% greater than an article including a single starch, no greater than at least about 220% greater than an article including a single starch, or no greater than at least about 210% greater than an article including a single starch. In an illustrative example, an article including a mixture of two or more starches can have a dart drop impact test value that is from at least about 110% to about 250% greater than an article including a single starch. In another illustrative example, an article including a mixture of two or more starches can have a dart drop impact test value that is from at least about 160% to about 220% greater than an article including a single starch.

In various embodiments, the present article including a starch-based polymeric material including a mixture of a first starch and a second starch can have a strength test value that is greater than a strength test value of a first article including a first starch-based polymeric material including a single starch comprised of a first starch and a second strength test value of a second article including a second starch-based polymeric material including a single starch comprising the second starch. For example, an article including a starch-based polymeric material having a mixture of a first starch and a second starch can have a dart drop impact test value that is greater than a first dart drop impact test value of a first article including a first starch-based polymeric material including a single starch comprised of the first starch and a second dart drop impact test value of a second article including a second starch-based polymeric material including a single starch comprising the second starch.

In further implementations, the article of the present invention including a starch-based polymeric material having a mixture of a first starch and a second starch can have a strength test value that is greater than a strength test value of an article formed from a petrochemical-based polymeric material without the starch-based polymeric material. For example, an article including a starch-based polymeric material including a mixture of a first starch and a second starch can have a tensile elongation at break test value in the machine direction that is greater than a tensile elongation at break test value in the machine direction of an article formed from a petrochemical-based polymeric material without the starch-based polymeric material.

In the article of the present invention, an amount of the polymeric content that biodegrades after 91 days is greater than an amount of the first starch and the second starch based on results of a biomethane potential test conducted according to ASTM D5511 at a temperature of 52°C using an inoculum having 55% by weight water and 45% by weight organic solids. In an implementation, when subjected to biodegradation testing, an article being substantially free of a biodegradation enhancing additive and having from about 20% by weight to about 40% by weight of one or more starch-based polymeric materials and from about 65% by weight to about 85% by weight of one or more petrochemical-based polymeric materials can have an amount of biodegradation after 32 days of testing under a biomethane potential test from about 10% to about 22%. In another implementation, when subjected to biodegradation testing, an article being substantially free of a biodegradation enhancing additive and having from about 20% by weight to about 40% by weight of one or more starch-based polymeric materials and from about 65% by weight to about 85% by weight of one or more petrochemical-based polymeric materials can have an amount of biodegradation after 62 days of testing under a biomethane potential test from about 25% to about 35%. In an additional implementation, when subjected to biodegradation testing, an article being substantially free of a biodegradation enhancing additive and having from about 20% by weight to about 40% by weight of one or more starch-based polymeric materials and from about 65% by weight to about 85% by weight of one or more petrochemical-based polymeric materials can have an amount of biodegradation after 91 days of testing under a biomethane potential test from about 30% to about 40%.

The biomethane potential testing can determine the potential for anaerobic biodegradation based on methanogenesis as a percent of total methanogenesis potential. In some cases, the biomethane potential testing can be used to predict biodegradability of the tested samples according to the ASTM 5511 standard and the biomethane potential testing can be conducted using one or more conditions from the ASTM 5511 standard. For example, the biomethane potential testing can take place at a temperature of about 52 °C. Additionally, the biomethane potential testing can have some conditions that are different from those of ASTM 5511. The biomethane potential testing used to define the biodegradability of the article of the present invention utilizes a temperature of 52°C and uses an inoculum having 55% by weight water and 45% by weight organic solids.

In various implementations, an article being substantially free of a biodegradation enhancing additive and having from about 20% by weight to about 40% by weight of one or more starch-based polymeric materials and from about 65% by weight to about 85% by weight of one or more petrochemical-based polymeric materials can have an amount of biodegradation after 91 days of testing under a biomethane potential test that is greater than an amount of the starch-based polymeric material (i.e., the first starch and the second starch and the plasticizer) present in the article. For example, an amount of biodegradation of an article being substantially free of a biodegradation enhancing additive and having from about 20% by weight to about 40% by weight of one or more starch-based polymeric materials and from about 65% by weight to about 85% by weight of one or more petrochemical-based polymeric materials can have an amount of biodegradation after 91 days of testing under a biomethane potential test that is from about 5% to about 60%, from about 10% to about 50%, or from about 15% to about 40% greater than the amount of the one or more starch-based polymeric materials present in the article.

In other implementations, an article being substantially free of a biodegradation enhancing additive and having from about 95% by weight to substantially all of one or more starch-based polymeric materials can have an amount of biodegradation after 32 days of testing under a biomethane potential test from about 30% to about 45%. Further, an article being substantially free of a biodegradation enhancing additive and having from about 95% by weight to substantially all of one or more starch-based polymeric materials can have an amount of biodegradation after 62 days of testing under a biomethane potential test from about 40% to about 55%. In additional implementations, an article being substantially free of a biodegradation enhancing additive and having from about 95% by weight to substantially all of one or more starch-based polymeric materials can have an amount of biodegradation after 91 days of testing under a biomethane potential test from about 48% to about 62%.

In addition, when subjected to biodegradation testing, an article having no greater than about 2% by weight of a biodegradation enhancing additive and having from about 20% by weight to about 40% by weight of one or more starch-based polymeric materials and from about 65% by weight to about 85% by weight of one or more petrochemical-based polymeric materials can have an amount of biodegradation after 32 days of testing under a biomethane potential test from about 9% to about 20%. In another implementation, when subjected to biodegradation testing, an article having no greater than about 2% by weight of a biodegradation enhancing additive and having from about 20% by weight to about 40% by weight of one or more starch-based polymeric materials and from about 65% by weight to about 85% by weight of one or more petrochemical-based polymeric materials can have an amount of biodegradation after 62 days of testing under a biomethane potential test from about 20% to about 32%. In an additional implementation, when subjected to biodegradation testing, an article having no greater than about 2% by weight of a biodegradation enhancing additive and having from about 20% by weight to about 40% by weight of one or more starch-based polymeric materials and from about 65% by weight to about 85% by weight of one or more petrochemical-based polymeric materials can have an amount of biodegradation after 91 days of testing under a biomethane potential test from about 37% to about 50%. In various situations, biodegradation test values can also be determined using ASTM standards, such as ASTM D6400, ASTM D5338, ASTM 5988, ASTM 5511, ASTM D7475, or ASTM 5526.

In addition, an article can be subjected to compostability testing. Compostability of articles can be performed in accordance with the ASTM D6400 test at the time of filing of this patent application. In some cases, phytotoxicity corresponding to the biodegradation of articles can be measured, biodegradation of articles can be measured, an elemental/metals analysis with regard to the articles can be performed, or a combination thereof.

Articles produced using the process 100 can pass the phytotoxicity component of the ASTM D6400 test. For example, a biomass in which the article has at least partially degraded can be used to germinate plant seeds, such as cucumber seeds and/or soybean seeds. The length of the germinated plant seeds can be measured and compared to a threshold length to determine if the article passes the phytotoxicity portion of the ASTM D6400 test. In a particular implementation, a length of a cucumber seed germinated in a biomass of an article produced according to the process 100 can be from about 58 mm to about 75 mm. Additionally, a length of a soybean seed germinated in a biomass of an article produced according to the process 100 can be from about 135 mm to about 175 mm.

As part of the elemental analysis component of the ASTM D6400 test, an analysis of elements included in a biomass of articles produced using the process 100 can be performed. For example, amounts of at least the following elements can be measured: arsenic, cadmium, copper, lead, mercury, nickel, selenium, and zinc. The amounts measured for each of the elements can be compared to a threshold amount to determine whether the sample passed the elemental analysis portion of the ASTM D6400 test for the respective elements.

Also, when articles produced according to the process 100 are subjected to compostability testing under the ASTM D6400 standard, an amount of CO₂ emitted in the test chamber after 98 days can be measured and can be at least about 10% of theoretical maximum CO₂ emissions, at least about 12% of theoretical maximum CO₂ emissions, at least about 14% of theoretical maximum CO₂ emissions, at least about 16% of theoretical maximum CO₂ emissions, at least about 18% of theoretical maximum CO₂ emissions, at least about 20% of theoretical maximum CO₂ emissions, at least about 22% of theoretical maximum CO₂ emissions, at least about 24% of theoretical maximum CO₂ emissions, or at least about 26% of theoretical maximum CO₂ emissions. In addition, when articles produced according to the process 100 are subjected to compostability testing under the ASTM D6400 standard, an amount of CO₂ emitted in the test chamber after 98 days can be no greater than about 50% of theoretical maximum CO₂ emissions, no greater than about 48% of theoretical maximum CO₂ emissions, no greater than about 45% of theoretical maximum CO₂ emissions, no greater than about 42% of theoretical maximum CO₂ emissions, no greater than about 40% of theoretical maximum CO₂ emissions, no greater than about 38% of theoretical maximum CO₂ emissions, no greater than about 35% of theoretical maximum CO₂ emissions, no greater than about 32% of theoretical maximum CO₂ emissions, or no greater than about 30% of theoretical maximum CO₂ emissions. In an illustrative example, when articles produced according to the process 100 are subjected to compostability testing under the ASTM D6400 standard, an amount of CO₂ emitted in the test chamber after 98 days can be from about 8% of theoretical maximum CO₂ emissions to about 55% of theoretical maximum CO₂ emissions. In another illustrative example, when articles produced according to the process 100 are subjected to compostability testing under the ASTM D6400 standard, an amount of CO₂ emitted in the test chamber after 98 days can be from about 15% of theoretical maximum CO₂ emissions to about 35% of theoretical maximum CO₂ emissions. In an additional illustrative example, when articles produced according to the process 100 are subjected to compostability testing under the ASTM D6400 standard, an amount of CO₂ emitted in the test chamber after 98 days can be from about 18% of theoretical maximum CO₂ emissions to about 30% of theoretical maximum CO₂ emissions. Additionally, when subjected to compostability testing under the ASTM D6400 standard, an amount of CO₂ emitted in the test chamber after 180 days can be at least about 35% of theoretical maximum CO₂ emissions, at least about 40% of theoretical maximum CO₂ emissions, at least about 45% of theoretical maximum CO₂ emissions, or at least about 50% of theoretical maximum CO₂ emissions, or at least about 55% of theoretical maximum CO₂ emissions. Further, when subjected to compostability testing under the ASTM D6400 standard, an amount of CO₂ emitted in the test chamber after 180 days can be no greater than about 85% of theoretical maximum CO₂ emissions, no greater than about 80% of theoretical maximum CO₂ emissions, no greater than about 75% of theoretical maximum CO₂ emissions, no greater than about 70% of theoretical maximum CO₂ emissions, no greater than about 65% of theoretical maximum CO₂ emissions, or no greater than about 60% of theoretical maximum CO₂ emissions. In an illustrative example, when articles produced according to the process 100 are subjected to compostability testing under the ASTM D6400 standard, an amount of CO₂ emitted in the test chamber after 180 days can be from about 38% of theoretical maximum CO₂ emissions to about 87% of theoretical maximum CO₂ emissions. In another illustrative example, when articles produced according to the process 100 are subjected to compostability testing under the ASTM D6400 standard, an amount of CO₂ emitted in the test chamber after 180 days can be from about 40% of theoretical maximum CO₂ emissions to about 60% of theoretical maximum CO₂ emissions. In an additional illustrative example, when articles produced according to the process 100 are subjected to compostability testing under the ASTM D6400 standard, an amount of CO₂ emitted in the test chamber after 180 days can be from about 42% of theoretical maximum CO₂ emissions to about 57% of theoretical maximum CO₂ emissions. In a further illustrative example, when articles produced according to the process 100 are subjected to compostability testing under the ASTM D6400 standard, an amount of CO₂ emitted in the test chamber after 180 days can be from about 70% of theoretical maximum CO₂ emissions to about 80% of theoretical maximum CO₂ emissions. In some instances, when articles produced according to the process 100 are subjected to compostability testing under the ASTM D6400 standard, an amount of CO₂ emitted in the test chamber after 180 days with respect to the theoretical maximum CO₂ emissions can be greater than the portion of the theoretical maximum amount of CO₂ that can be attributed to an amount of a starch-based polymeric material included in the articles. Thus, an amount of the CO₂ emitted in the chamber after 180 days can be attributed to an amount of a non-compostable petrochemical-based polymeric material under the ASTM D6400 standard.

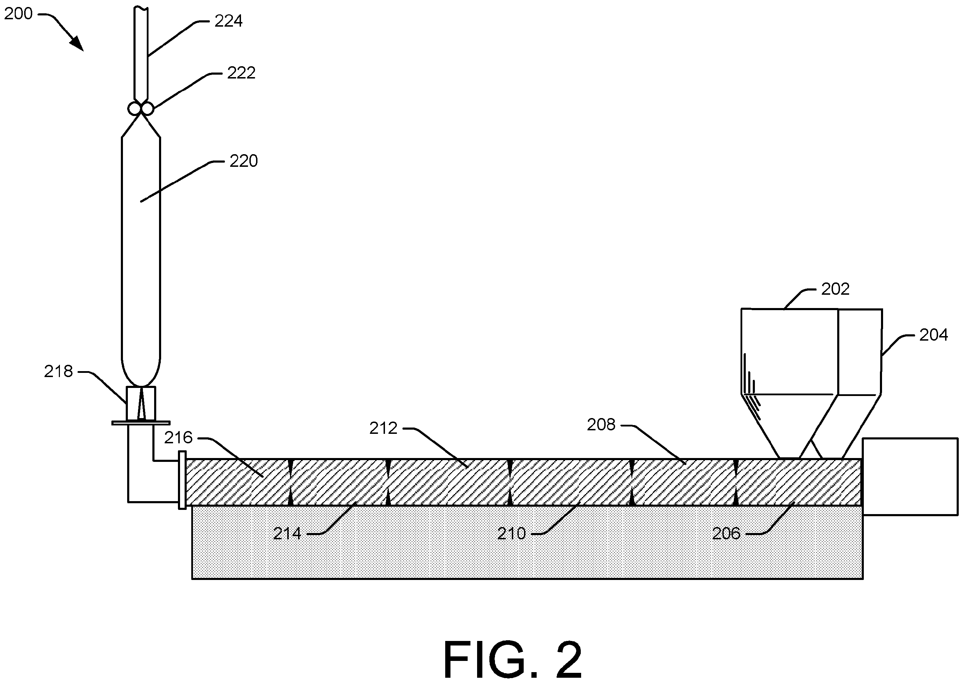

Although FIG. 1 illustrates one illustrative example of certain steps of a process usable for producing an article as disclosed herein, it is to be appreciated that the configuration and inclusion of certain steps shown in FIG. 1 is only one example. FIG. 2 illustrates components of an example manufacturing system 200 to produce articles including biodegradable materials. In some cases, the manufacturing system 200 can be used in the process 100 of FIG. 1. In an illustrative example, the manufacturing system 200 is an extruder, such as a single screw extruder or a twin screw extruder.

In an implementation, one or more petrochemical-based polymeric materials and one or more starch-based polymeric materials as described herein are provided via a first hopper 202 and a second hopper 204. The one or more petrochemical-based polymeric materials can include one or more polyolefin-based polymeric materials. For example, the one or more petrochemical-based polymeric materials can include a polyethylene. Additionally, the one or more starch-based polymeric materials is formed from at least a first starch and a second starch, and a plasticizer, and including no greater than 5% by weight water. The first starch can be derived from one of potato, corn, or tapioca and the second starch can be derived from a different one of potato, corn, or tapioca. Furthermore, the one or more starch-based polymeric materials can include an amount of a third starch that is different from the first starch and the second starch.

The one or more starch-based polymeric materials and the one or more petrochemical-based polymeric materials can be mixed in a first chamber 206 to produce a mixture of materials. In some cases, the mixture of materials can include from about 10% by weight to about 40% by weight of the one or more starch-based polymeric materials, from about 60% by weight to about 89% by weight of the one or more petrochemical-based polymeric materials, and from about 1% by weight to about 9% by weight of the one or more compatibilizers.

In the example implementation shown in FIG. 2, the mixture of materials can pass through a number of chambers, such as the first chamber 206, a second chamber 208, a third chamber 210, a fourth chamber 212, a fifth chamber 214, and an optional sixth chamber 216. The mixture of materials can be heated in the chambers 206, 208, 210, 212, 214, 216. In some cases, a temperature of one of the chambers can be different from a temperature of another one of the chambers. In an illustrative example, the first chamber 206 is heated at a temperature between about 120°C and about 140°C; the second chamber 208 is heated at a temperature between about 130°C and about 160°C; the third chamber 210 is heated at a temperature between about 135°C and about 165°C; the fourth chamber 212 is heated at a temperature between about 140°C and about 170°C; the fifth chamber 214 is heated at a temperature between about 145°C and about 180°C; and the optional sixth chamber 216 is heated at a temperature between about 145°C and about 180°C.

The heated mixture can then be extruded using a dye 218 to form an extruded object, such as a film. A gas can be injected into the extruded object to expand it with a pressure between about 10500 kPa (105 bar) and about 14000 kPa (140 bar). The resulting tube 220 can be drawn up through rollers 222 to create a film 224 with a thickness between about 0.02 mm and 0.05 mm. In some cases, the film 224 can be comprised of a single layer. In other cases, the film 224 can be comprised of multiple layers. For example, the film 224 can be comprised of at least 2 layers, at least 4 layers, or at least 6 layers. Additionally, the film 224 can be comprised of no greater than about 12 layers, no greater than about 10 layers, or no greater than about 8 layers. Optionally, the film 224 can be formed into one or more bags. A bag formed from the film 224 can have a thickness from about 0.02 mm to about 0.05 mm. The bag can also include a cavity for holding items. In a particular implementation, a cavity of a bag formed from the film 224 can have a volume of at least about 0.1 L, at least about 0.5 L, at least about 1 L, at least about 2 L, or at least about 5 L. Additionally, a cavity of a bag formed from the film 224 can have a volume no greater than about 100 L, no greater than about 75 L, no greater than about 50 L. In an illustrative example, a cavity of a bag formed from the film 224 can have a volume from about 1 L to about 100 L. In another illustrative example, a cavity of a bag formed from the film 224 can have a volume from about 5 L to about 20 L.

In an implementation, the film 224 is formed from a starch-based polymeric material as described herein. The starch-based polymeric material includes a mixture of starches. In some cases, the starch-based polymeric material can include from about 70% by weight to about 90% by weight of the mixture of starches. Additionally, the starch-based polymeric material can include from about 10% by weight to about 30% by weight of a plasticizer, such as glycerin. The starch-based polymeric material can also include from about 0.4% by weight to about 1.5% by weight water.

In one example, the film 224 can be formed from a starch-based polymeric material that has from about 15% by weight to about 25% by weight of a first starch, from about 15% by weight to about 25% by weight of a second starch, and from about 55% by weight to about 65% by weight of a third starch. In an illustrative example, the first starch can include potato starch, the second starch can include corn starch, and the third starch can include tapioca starch. In another illustrative example, the first starch can include tapioca starch, the second starch can include corn starch, and the third starch can include potato starch. In an additional illustrative example, the first starch can include tapioca starch, the second starch can include potato starch, and the third starch can include corn starch.

In other implementations, the film 224 can be formed from a starch-based polymeric material that has from about 27% by weight to about 36% by weight of a first starch, from about 27% by weight to about 36% by weight of a second starch, and from about 27% by weight to about 36% by weight of a third starch. In an illustrative example, the first starch can include corn starch, the second starch can include potato starch, and the third starch can include tapioca starch.

In various implementations, the film 224 can be formed from a starch-based polymeric material that has from about 15% by weight to about 25% by weight of a first starch and from about 75% by weight to about 85% by weight of a second starch. In an illustrative example, the first starch can include corn starch and the second starch can include potato starch or tapioca starch. In another illustrative example, the first starch can include potato starch and the second starch can include corn starch or tapioca starch. In an additional illustrative example, the first starch can include tapioca starch and the second starch can include corn starch or potato starch.

In addition to the starch-based polymeric material, the film 224 can be formed from a polyethylene-containing polymeric material. In an implementation, the film 224 can be formed from about 20% by weight to about 35% by weight of the starch-based polymeric material and from about 60% by weight to about 75% by weight of the polyethylene-containing polymeric material. Furthermore, the film 224 can be formed from about 3% by weight to about 7% by weight of a compatibilizer, such as a maleic anhydride-based compatibilizer.

The film 224 including a starch-based polymeric material including a mixture of starches can have a dart drop impact test value that is greater than a dart drop impact test value of a film including a starch-based polymeric material comprised of a single one of the starches in the mixture of starches. For example, in addition to including an amount of a petrochemical-based polymeric material, such as a polyolefin-based polymeric material, the film 224 includes an amount of a starch-based polymeric material having a mixture of a first starch and a second starch. In these cases, the film 224 can have a dart drop impact test value that is greater than a dart drop impact test value of a first article including the amount of the petrochemical-based polymeric material and a first starch-based polymeric material including a single starch comprised of the first starch. The film 224 can also have a dart drop impact test value that is greater than a dart drop impact test value of a second article including the amount of the petrochemical-based polymeric material and a second starch-based polymeric material including a single starch comprised of the second starch. When the film 224 includes a starch-based polymeric material including a mixture of the first starch, the second starch, and a third starch, the film 224 can have a dart drop impact test value that is greater than a dart drop impact test value of a third article including the amount of the petrochemical-based polymeric material and a third starch-based polymeric material including a single starch comprised of the third starch.

The amount of the first starch included in the first article, the amount of the second starch included in the second article, and/or the amount of the third starch included in the third article can be approximately the same as the amount of the starch-based polymeric material including the mixture of starches included in the film 224. To illustrate, when the film 224 includes about 25% by weight of the starch-based polymeric content that includes a mixture of starches, the first article, the second article, and/or the third article can include about 25% by weight of the single starch. Thus, the amount of the petrochemical-based polymeric content included in the film 224 and the first article, the second article, and the third article is approximately the same and the total amount of the starch-based polymeric content included in the film 224 and the first article, the second article, and the third article is approximately the same. Additionally, other components of the film 224, the first article, the second article, and the third article, such as a compatibilizer, can also be approximately the same. In these situations, the film 224 differs from the first article, the second article, and the third article because the starch-based polymeric content of the film 224 is comprised of multiple starches, while the starch-based polymeric content of the first article, the second article, and the third article is comprised of a single starch.

Also, the film 224 can have a tensile elongation at break value in the machine direction from about 600% to about 670% and a tensile elongation at break value in the transverse direction from about 625% to about 700%. In particular, the film 224 can have a tensile elongation at break in the machine direction that is greater than a tensile elongation at break value in the machine direction of an article that is formed from one or more polyolefin-based polymeric materials and free of starch-based polymeric materials. Furthermore, in implementations where the film 224 is formed from a polyethylene-containing polymeric material and a starch-based polymeric material including a mixture of starches, the film 224 can have an Elmendorf tear force value in the machine direction from about 12795.3 g/mm (325 g/mil) to about 16141.7 g/mm (410 g/mil) and an Elmendorf tear force value in the transverse direction from about 19291.3 g/mm (490 g/mil) to about 25590.6 g/mm (650 g/mil).

In a particular implementation, the film 224 can be substantially free of an additive to enhance biodegradation and be formed from about 22% by weight to about 27% by weight of a starch-based polymeric material including a mixture of starches and from about 67% by weight to about 73% by weight of a polyethylene-containing polymeric material. In these situations, the film 224 can have biodegradation from about 12% to about 20% according to biomethane potential testing after 32 days. In addition, after 62 days the film 224 can have biodegradation from about 26% to about 34% according to biomethane potential testing. Further, after 91 days, the film 224 can have biodegradation from about 30% to about 40% according to biomethane potential testing.

In a particular implementation, the film 224 includes a starch-based polymeric material including a first starch and a second starch and a polyolefin-based polymeric material where an amount of polymeric content that biodegrades after 91 days measured according to biomethane potential testing is greater than an amount of the first starch and the second starch. In some cases, substantially all of the starch-based polymeric material biodegrades after 91 days as measured according to biomethane potential testing. Further, an amount of biodegradation of the film 224 after 91 days measured according to biomethane potential testing can be from about 5% to about 60% greater than an amount of the starch-based polymeric material. In addition, an amount of polymeric content that biodegrades after 91 days measured according to biomethane potential testing can be from about 30% by weight to about 50% by weight. Also, an amount of polymeric content that biodegrades after 62 days measured according to biomethane potential testing can be from about 25% by weight to about 35% by weight. In various implementations, the film 224 can be substantially free of a biodegradation enhancing additive, while in other implementations, the film 224 can include from about 0.5% by weight to about 2.5% by weight of a biodegradation enhancing additive.

Additionally, the film 224 can include from about 20% by weight to about 40% by weight of one or more starch-based polymeric materials or from about 10% by weight to about 50% by weight of one or more starch-based polymeric materials. Also, the film 224 can include from about 65% by weight to about 85% by weight of one or more petrochemical-based polymeric materials or from about 60% by weight to about 90% by weight of one or more petrochemical-based polymeric materials. In some cases, the film 224 can include from about 1% by weight to about 9% by weight of a compatibilizer or from about 3% by weight to about 7% by weight of the compatibilizer.

In a particular implementation, the film 224 can include from about 20% by weight to about 40% by weight of one or more starch-based polymeric materials and from about 60% by weight to about 80% by weight of one or more polyolefin-based polymeric materials. In an illustrative implementation, the film 224 can include from about 20% by weight to about 30% by weight of the one or more starch-based polymeric materials and from about 65% by weight to about 75% by weight of one or more polyolefin-based polymeric materials. The one or more starch-based polymeric materials includes a first starch and a second starch and the one or more starch-based polymeric materials can include from about 10% by weight to about 25% by weight of a first starch and from about 55% by weight to about 85% by weight of a second starch. In other implementations, the one or more starch-based polymeric materials can include from about 10% by weight to about 25% by weight of a first starch and from about 55% by weight to about 85% by weight of a second starch. In various implementations, the one or more starch-based polymeric materials can include a third starch and the third starch can comprise from about 10% by weight to about 25% by weight of the one or more starch-based polymeric materials.

Furthermore, the film 224 can be subjected to compostability testing under ASTM D6400 at the time of filing this patent application. In an implementation, the film 224 can have a thickness from about 0.035 mm to about 0.050 mm; have a composition including: from about 22% by weight to about 32% by weight of a starch-based polymeric material including a mixture of starches, an amount of a polyethylene-based polymeric material from about 65% by weight to about 75% by weight, an amount of a compatibilizer from about 3% by weight to about 6% by weight, and be substantially free of an additive to enhance biodegradation; and when the film 224 is subjected to compostability testing under ASTM D6400, an amount of CO₂ emitted in the test chamber after 98 days can be from about 18% of theoretical maximum CO₂ emissions to about 26% of theoretical maximum CO₂ emissions. In another implementation, the film 224 can have a thickness from about 0.03 mm to about 0.04 mm; have a composition including: from about 25% by weight to about 35% by weight of a starch-based polymeric material including a mixture of starches, an amount of a polyethylene-based polymeric material from about 60% by weight to about 70% by weight, an amount of a compatibilizer from about 3% by weight to about 6% by weight, and an amount of an additive to enhance biodegradation from about 0.5% by weight to about 2% by weight; and when the film 224 is subjected to compostability testing under ASTM D6400, an amount of CO₂ emitted in the test chamber after 98 days can be from about 29% of theoretical maximum CO₂ emissions to about 37% of theoretical maximum CO₂ emissions.

In an additional implementation, the film 224 can have a thickness from about 0.035 mm to about 0.050 mm; have a composition including: from about 22% by weight to about 32% by weight of a starch-based polymeric material including a mixture of starches, an amount of a polyethylene-based polymeric material from about 65% by weight to about 75% by weight, an amount of a compatibilizer from about 3% by weight to about 6% by weight, and be substantially free of an additive to enhance biodegradation; and when the film 224 is subjected to compostability testing under ASTM D6400, an amount of CO₂ emitted in the test chamber after 180 days can be from about 44% of theoretical maximum CO₂ emissions to about 52% of theoretical maximum CO₂ emissions. In a further implementation, the film 224 can have a thickness from about 0.03 mm to about 0.04 mm; have a composition including: from about 25% by weight to about 35% by weight of a starch-based polymeric material including a mixture of starches, an amount of a polyethylene-based polymeric material from about 60% by weight to about 70% by weight, an amount of a compatibilizer from about 3% by weight to about 6% by weight, and an amount of an additive to enhance biodegradation from about 0.5% by weight to about 2% by weight; and when the film 224 is subjected to compostability testing under ASTM D6400, an amount of CO₂ emitted in the test chamber after 180 days can be from about 50% of theoretical maximum CO₂ emissions to about 60% of theoretical maximum CO₂ emissions.

In other implementations, the film 224 can have a thickness from about 0.03 mm to about 0.04 mm; have a composition including: from about 25% by weight to about 35% by weight of a starch-based polymeric material including a mixture of starches, an amount of a polyethylene-based polymeric material from about 10% by weight to about 20% by weight, an amount of a compostable petrochemical-based polymeric material from about 45% by weight to about 55% by weight, an amount of a compatibilizer from about 3% by weight to about 5% by weight, and include from about 0.5% by weight to about 2% by weight of an additive to enhance biodegradation; and when the film 224 is subjected to compostability testing under ASTM D6400, an amount of CO₂ emitted in the test chamber after 98 days can be from about 25% of theoretical maximum CO₂ emissions to about 35% of theoretical maximum CO₂ emissions. In a further implementation, the film 224 can have a thickness from about 0.03 mm to about 0.04 mm; have a composition including: from about 25% by weight to about 35% by weight of a starch-based polymeric material including a mixture of starches, an amount of a polyethylene-based polymeric material from about 10% by weight to about 20% by weight, an amount of a compostable petrochemical-based polymeric material from about 45% by weight to about 55% by weight, an amount of a compatibilizer from about 3% by weight to about 5% by weight, and include from about 0.5% by weight to about 2% by weight of an additive to enhance biodegradation; and when the film 224 is subjected to compostability testing under ASTM D6400, an amount of CO₂ emitted in the test chamber after 180 days can be from about 70% of theoretical maximum CO₂ emissions to about 80% of theoretical maximum CO₂ emissions.

Other architectures can be used to implement the described functionality, and are intended to be within the scope of this disclosure. Furthermore, although specific distributions of responsibilities are defined above for purposes of discussion, the various functions and responsibilities might be distributed and divided in different ways, depending on circumstances.

The concepts described herein will be further described in the following examples with reference to the following figures, which do not limit the scope of the disclosure described in the claims.

### EXAMPLES

### Example 1

A starch-based polymer containing 27% tallow glycerin (99% pure glycerin), 73% starch, and <1% water was mixed with LLDPE and anhydride-modified LLDPE in proportions of 25%, 70%, and 5%, respectively, by weight. Eleven samples were prepared and blown into films. The temperature settings of the extruder used are shown in Table 1. B1, B2, B3, B4, and B5 refer to temperature settings at different locations of the barrel of the extruder and AD1, D1, and D2 refer to the temperature settings at different locations in the die section of the extruder.

**Table 1.**

| **Temperature** | **Extruder** | | | | | | | |
|---|---|---|---|---|---|---|---|---|
| | **B1** | **B2** | **B3** | **B4** | **B5** | **AD1** | **D1** | **D2** |
| Set Value | 130 | 140 | 145 | 150 | 160 | 160 | 160 | 160 |

The extruder blow settings are shown in Table 2.

**Table 2.**

| **Blow** | **Extruder** | | | | | |
|---|---|---|---|---|---|---|
| | Melt Temperature Setting (°C) | Pressure kPa (bar) | Screw RPM | Extruder Motor Setting (Amps) | Blower Speed | Take-Up Speed (meters/minute) |
| Set Value (Samples 1-11) | 148 | 13200 (132) | 17 | 32.0 | 0 | 7.0 |
| Set Value (Sample 12) | 147 | 11500 (115) | 17 | 32.0 | 0 | 7.0 |

The resulting films contained 6.5% glycerin, 18.5% starch, 70% LLDPE, and 5% anhydride-modified LLDPE. The films then were tested using a falling dart impact test according to ASTM D1709. The strength test results of these tests are shown in Table 3.

**Table 3.**

| **Sample No.** | **Film Thickness mm (Mil)** | **Dart Test** |
|---|---|---|
| 1 | 0.0389 (1.535) | >387 |
| 2 | 0.0381 (1.50) | >387 |
| 3 | 0.0381 (1.50) | >387 |
| 4 | 0.0381 (1.50) | 347 |
| 5 | 0.0368 (1.45) | 347 |
| 6 | 0.0393 (1.55) | 387 |
| 7 | 0.0393 (1.55) | 387 |
| 8 | 0.0381 (1.50) | >387 |
| 9 | 0.0393 (1.55) | 387 |
| 10 | 0.0393 (1.55) | >387 |
| 11 | 0.0381 (1.50) | >387 |
| 12 | 0.05 (2.00) | 227 |

### Example 2

A starch-based polymer containing 27% tallow glycerin (99% pure glycerin), 73% starch, and <1% water was mixed with LLDPE and anhydride-modified LLDPE in proportions of 25%, 70%, and 5%, respectively, by weight. Two samples were prepared and blown into films. The temperature settings of the extruder used are shown in Table 4.

**Table 4.**

| **Temperature** | | **Extruder** | | | | | | | |
|---|---|---|---|---|---|---|---|---|---|
| | **B1** | **B2** | **B3** | **B4** | **B5** | **B6** | **AD1** | **D1** | **D2** |
| Set Value | 130 | 150 | 155 | 160 | 165 | 165 | 165 | 170 | 170 |

The extruder blow settings are shown in Table 5.

**Table 5.**

| | **Extruder** | | | | | |
|---|---|---|---|---|---|---|
| | Melt Temperature Setting (°C) | Pressure kPa (bar) | Screw RPM | Extruder Motor Setting (Amps) | Blower Speed | Take-Up Speed (meters/minute) |
| Set Value | 149 | 12100 (121) | 16.0 | 35.0 | 0 | 6.0 |

The resulting films contained 6.5% glycerin, 18.5% starch, 70% LLDPE, and 5% anhydride-modified LLDPE. The films then were tested using a falling dart impact test according to ASTM D1709. The strength test results of these tests are shown in Table 6.

**Table 6.**

| **Sample No.** | **Film Thickness mm (Mil)** | **Dart Test** |
|---|---|---|
| 1 | 0.04 (1.575) | 347 |
| 2 | 0.034 (1.335) | 362 |

### Example 3

In order to test the strength characteristics of various combinations of starch, 17 starch-based polymers containing 27% tallow glycerin (99% pure glycerin), 73% starch, and <1% water were mixed with LLDPE and anhydride-modified LLDPE in proportions of 25%, 70%, and 5%, respectively, by weight. The resulting mixtures were then extruded and blown into films. The resulting films contained 6.5% glycerin, 18.5% starch, 70% LLDPE, and 5% anhydride-modified LLDPE. The films were then tested using a falling dart drop impact test according to ASTM D1709. The combinations of starches tested and strength test results are shown in Table 7. As can be seen from the results shown in Table 7, samples formed from a mixture of starches have a dart drop impact test value that is greater than the dart drop impact test value of samples formed from a single starch.

**Table 7.**

| **Sample No.** | **Water Content (Starch-based polymers)** | **Starch Content (%)** | | | **Thickness (mm)** | | **Dart Test** |
|---|---|---|---|---|---|---|---|
| | | **Potato** | **Corn** | **Tapioca** | | | |
| 1 (Reference) | 0.58 | 0 | 100 | 0 | 0.040 | 0.045 | 137 |
| 2 (Reference) | 0.73 | 100 | 0 | 0 | 0.040 | 0.045 | 167 |
| 3 (Reference) | 0.80 | 0 | 100 | 0 | 0.040 | 0.045 | 167 |
| 4 (Reference) | 0.93 | 100 | 0 | 0 | 0.030 | 0.035 | 167 |
| 5 (Reference) | 0.49 | 0 | 0 | 100 | 0.035 | 0.040 | 197 |
| 6 (Reference) | 0.55 | 0 | 0 | 100 | 0.030 | 0.035 | 212 |
| 7 | 1.03 | 33.33 | 33.33 | 33.33 | 0.030 | 0.035 | 242 |
| 8 | 1.04 | 20 | 20 | 60 | 0.030 | 0.035 | 267 |
| 9 | 0.97 | 60 | 20 | 20 | 0.025 | 0.030 | 252 |
| 10 (Reference) | 0.93 | 0 | 0 | 100 | 0.025 | 0.030 | 257 |
| 11 | 0.94 | 20 | 0 | 80 | 0.025 | 0.030 | 257 |
| 12 | 1.37 | 20 | 80 | 0 | 0.025 | 0.030 | 257 |
| 13 | 0.95 | 80 | 0 | 20 | 0.030 | 0.035 | 302 |
| 14 | 1.19 | 20 | 60 | 20 | 0.030 | 0.035 | 322 |
| 15 | 0.96 | 0 | 80 | 20 | 0.025 | 0.030 | 277 |
| 16 | 1.05 | 80 | 20 | 0 | 0.025 | 0.030 | 317 |
| 17 | 0.81 | 0 | 20 | 80 | 0.025 | 0.030 | 322 |

### Example 4

Using the same protocols as described in Example 3, 11 combinations of starches were tested. Specifically, 11 starch-based polymers containing 27% tallow glycerin (99% pure glycerin), 73% starch, and <1% water were mixed with LLDPE and anhydride-modified LLDPE in proportions of 25%, 70%, and 5%, respectively, by weight. The resulting mixtures were then extruded and blown into films. The resulting films contained 6.5% glycerin, 18.5% starch, 70% LLDPE, and 5% anhydride-modified LLDPE. The films were then tested using a falling dart impact test according to ASTM D1709. The combinations of starches tested and strength test results are shown in Table 8. As with the results shown in Table 7, the results of Table 8 show that samples formed from a mixture of starches have dart drop impact test values that are greater than the dart drop impact test values of samples formed from a single starch.

**Table 8.**

| **Sample No.** | **Starch Content (%)** | | | **Thickness mm (Mil)** | **Dart Test** |
|---|---|---|---|---|---|
| | **Potato** | **Corn** | **Tapioca** | | |
| 1 (Reference) | 0 | 100 | 0 | 0.0389 (1.535) | 347 |
| 2 (Reference) | 100 | 0 | 0 | 0.0389 (1.535) | 362 |
| 3 (Reference) | 0 | 0 | 100 | 0.0393 (1.550) | 367 |
| 4 | 80 | 20 | 0 | 0.0393 (1.550) | 387 |
| 5 | 0 | 20 | 80 | 0.0393 (1.550) | 387 |
| 6 | 0 | 80 | 20 | 0.0393 (1.550) | 387 |
| 7 | 0 | 10 | 90 | 0.0393 (1.550) | 387 |
| 8 | 33.33 | 33.33 | 33.33 | 0.0381 (1.500) | 387 |
| 9 | 80 | 0 | 20 | 0.0381 (1.500) | 387 |
| 10 | 10 | 0 | 90 | 0.0381 (1.500) | 387 |
| 11 | 0 | 90 | 10 | 0.0381 (1.500) | 387 |

### Example 5

A starch-based polymer containing 27% tallow glycerin (99% pure glycerin), 73% starch, and <1% water was mixed with LLDPE and anhydride-modified LLDPE in proportions of 25%, 70%, and 5%, respectively, by weight. The starch was a blend of 90% corn starch and 10% potato starch, by weight. The resulting mixture was then extruded and blown into a film. The resulting film contained 6.5% glycerin, 18.5% starch, 70% LLDPE, and 5% anhydride-modified LLDPE. For comparison purposes, a second film containing 100% LLDPE was also prepared. Using a variety of testing methods a number of strength characteristics were tested, the results of which are shown in Table 10. In table 10, transverse directions is abbreviated (TD) and machine directions is abbreviated (MD). The results shown in Table 10 indicate that the sample formed from the starch-based polymer blend has values for some of the strength tests that are greater than the values for some of strength tests performed with respect to the LLDPE sample.

**Table 10.**

| | **Sample Form** | **Test Method** | **CP14102701** | **LLDPE** |
|---|---|---|---|---|
| Film Thickness mm (mil) | Film | | 0.034 (1.35) | 0.034 (1.35) |
| Mass density (SG): | Film or Pellets | ASTM D792 | 1.04 | 0.92 |
| Secant Modulus MD, kPa (kpsi) | Film | ASTM D882 | 206843 +/-6894.76 (30 | 259932.3 +/-15168.5 (37.7 |
| | | | +/- 1) | +/- 2.2) |
| Secant Modulus TD, kPa (kpsi) | Film | ASTM D882 | 206843 +/-8963.18 (30 +/- 1.3) | 221321.7 +/-16547.4 (32.1 +/- 2.4) |
| Tensile Strength MD Break, kPa (kpsi) | Film | ASTM D882 | 31026.4 +/-2757.9 (4.5 +/- 0.4) | 30336.9 +/-1378.95 (4.4 +/-0.2) |
| Tensile Strength TD Break, kPa (kpsi) | Film | ASTM D882 | 29647.5 +/-4826.33 (4.3 +/- 0.7) | 32405.4 +/-7584.23 (4.7 +/-1.1) |
| Tensile Elongation MD Break, % | Film | ASTM D882 | 632 +/- 27 | 571 +/- 25 |
| Tensile Elongation TD Break, % | Film | ASTM D882 | 664 +/- 32 | 651 +/- 65 |
| Elmendorf Tear MD, g/mm (g/mil) | Film | ASTM D1922 | 14448.8 +/-1496.06 (367 +/- 38) | 10000 +/-1614.17 (254 +/- 41) |
| Elmendorf Tear TD, g/mm (g/mil) | Film | ASTM D1922 | 22362.2 +/-2755.90 (568 +/- 70) | 18937 +/-1614.17 (481 +/- 41) |
| Dart Drop Impact | Film | ASTM D1709 | 320 +/- 10 | 175 +/- 10 |
| Barrier: OPV 23° C, 0% RH | Film | cc-25 mic/m² day-atm O₂ | 2,916 +/- 49 | 4,346 +/- 130 |
| Barrier: MVPV 39° C, 100% RH | Film | gm/m²-day | 24 +/- 3 | 14 +/- 0 |
| Optical Transparency % | Film | ASTM D1746 | 7 +/- 1 | 44 +/- 1 |
| Heat Seal Strength | Film | 275.79 kPa (40 psi), 0.5 sec | 55.12 g/mm (1,400 g/in) | 58.94 g/mm (1,497 g/in) |
| Heat Seal Temperature Range | Film | | 130 - 180 C | 130 - 180 C |
| Melt Flow Rate | Pellets | ASTMD1238 | 0.47 g/10 min | 1.0 g/10 min |
| Bio Content | Film or Pellets | | 25% | 0% |
| Water Content | Pellets | ASTMD6980 | 0.35% | 0% |

### Example 6

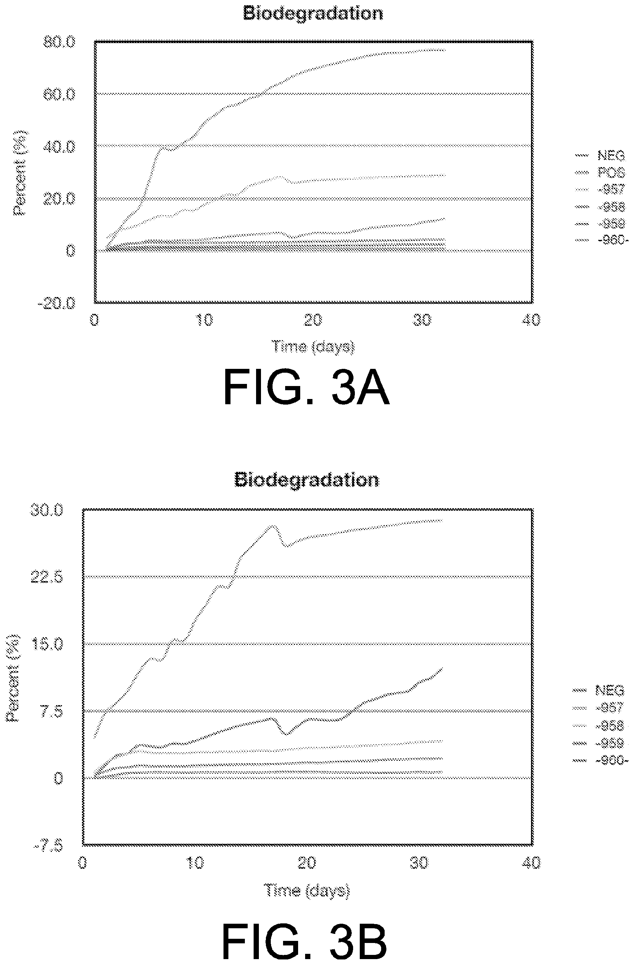

Seven samples were tested for 32 days to determine biodegradability characteristics using biomethane potential testing, to determine the potential for anaerobic biodegradation based on methanogenesis as a percent of total methanogenesis potential. The biomethane potential test was intended to replicate the conditions of a full-scale anaerobic digester (landfill). The biomethane potential test was conducted at a temperature of about 52°C using an inoculum having about 55% by weight water and about 45% by weight organic solids. The positive control sample was cellulose and the negative control sample was untreated polyethylene. The results of four samples (referred to as 957, 958, 959, and 960) are shown in FIGs. 3A and 3B and in Table 11.

**Table 11.**

| | **Inoculum** | **Negative** | **Positive** | **957** | **958** | **959** | **960** |
|---|---|---|---|---|---|---|---|
| **Cumulative Gas Volume (mL)** | 729.6 | 962.5 | 8184.2 | 13366.8 | 2805.7 | 2995.4 | 5599.0 |
| **Percent CH₄ (%)** | 18.4 | 19.3 | 35.4 | 29.2 | 21.8 | 0.0 | 33.6 |
| **Volume CH₄ (mL)** | 134.2 | 185.5 | 2898.2 | 3904.4 | 612.4 | 0.0 | 1880.7 |
| **Mass CH₄ (g)** | 0.10 | 0.13 | 2.07 | 2.79 | 0.44 | 0.00 | 1.34 |
| **Percent CO₂ (%)** | 49.9 | 44.0 | 44.5 | 43.4 | 43.2 | 40.2 | 45.4 |
| **Volume CO₂ (mL)** | 364.0 | 423.3 | 3639.8 | 5799.9 | 1211.8 | 1204.2 | 2544.1 |
| **Mass CO₂ (g)** | 0.72 | 0.83 | 7.15 | 11.39 | 2.38 | 2.37 | 5.00 |
| **Sample Mass (g)** | 1,000 | 10 | 10 | 20.0 | 20.0 | 20 | 20 |
| **Theoretical Sample Mass (g)** | 0.0 | 8.6 | 4.2 | 17.1 | 17.1 | 17.1 | 17.1 |
| **Biodegraded Mass (g)** | 0.27 | 0.33 | 3.50 | 5.20 | 0.98 | 0.65 | 2.37 |
| **Percent Biodegraded (%)** | | 0.7 | 76.7 | 28.8 | 4.1 | 2.2 | 12.3 |
| **Adjusted Percent Biodegraded (%)** | | 0.9 | 100.0 | 37.5 | 5.4 | 2.9 | 16.0 |

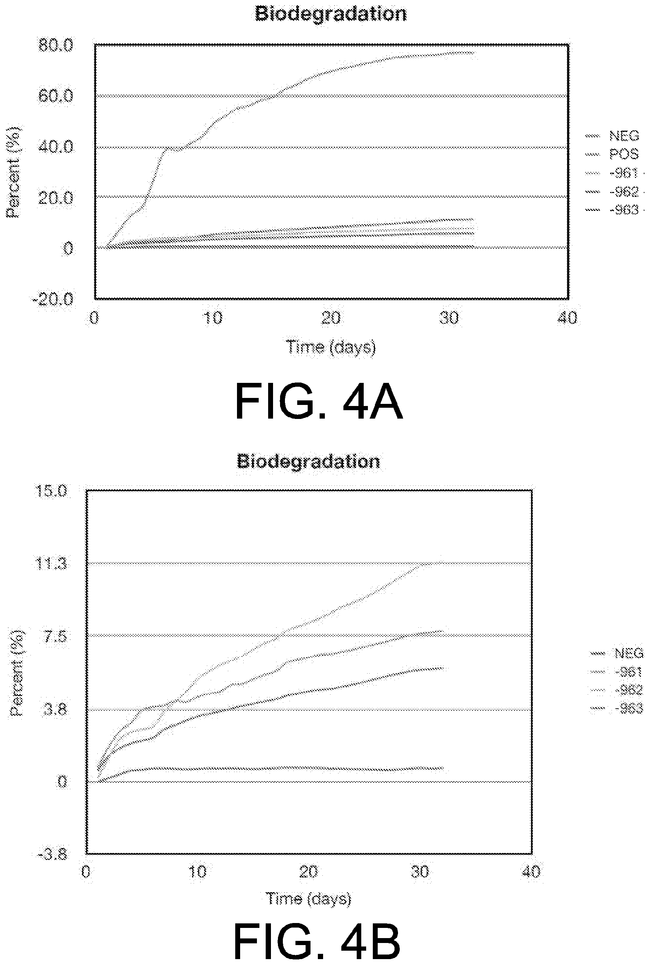

The results of biomethane potential testing for samples 961, 962, and 963 are shown in FIGs. 4A and 4B, and Table 12.

**Table 12.**

| | **Inoculum** | **Negative** | **Positive** | **961** | **962** | **963** |
|---|---|---|---|---|---|---|
| **Cumulative Gas Volume (mL)** | 729.6 | 962.5 | 8184.2 | 4286.4 | 5538.9 | 5796.5 |
| **Percent CH₄ (%)** | 18.4 | 19.3 | 35.4 | 27.1 | 31.8 | 0.0 |
| **Volume CH₄ (mL)** | 134.2 | 185.5 | 2898.2 | 1161.9 | 1759.5 | 0.0 |
| **Mass CH₄ (g)** | 0.10 | 0.13 | 2.07 | 0.83 | 1.26 | 0.00 |
| **Percent CO₂ (%)** | 49.9 | 44.0 | 44.5 | 42.5 | 42.7 | 40.9 |
| **Volume CO₂ (mL)** | 364.0 | 423.3 | 3639.8 | 1821.0 | 2363.9 | 2370.7 |
| **Mass CO₂ (g)** | 0.72 | 0.83 | 7.15 | 3.58 | 4.64 | 4.66 |
| **Sample Mass (g)** | 1,000 | 10 | 10 | 20.0 | 20.0 | 20 |
| **Theoretical Sample Mass (g)** | 0.0 | 8.6 | 4.2 | 17.1 | 17.1 | 17.1 |
| **Biodegraded Mass (g)** | 0.27 | 0.33 | 3.50 | 1.60 | 2.21 | 1.27 |
| **Percent Biodegraded (%)** | | 0.7 | 76.7 | 7.8 | 11.3 | 5.9 |
| **Adjusted Percent Biodegraded (%)** | | 0.9 | 100.0 | 10.1 | 14.8 | 7.6 |

The content and form of the samples tested can be found in Table 13. The starch-based polymer material included 27% glycerin (99% pure), 73% starch, and <1% water. "Ecoflex" refers to the Ecoflex^{®} plastic product from BASF.

**Table 13.**

| **Sample No.** | **Starch-Based Polymer (%)** | **Polyethylene (%)** | **Ecoflex (%)** | **Maleic Anhydride Modified LLDPE (%)** | **Additive (%)** | **Biodegradation -Enhancing Additive** | **Form** |
|---|---|---|---|---|---|---|---|
| 957 (Refer ence) | 100 | 0 | | 0 | 0 | - | Press-outs |
| 958 | 25 | 70 | | 5 | 0 | - | Film |
| 959 | 30 | 65 | | 5 | 0 | - | Film |
| 960 | 25 | 70 | | 5 | 0 | - | Bag |
| 961 | 25 | 69 | | 5 | 1 | Enso Restore | Film |
| 962 | 25 | 69.5 | | 5 | .5 | Bio-B | Film |
| 963 | 30 | 15 | 50 | 5 | 0 | - | Film |

### Example 7

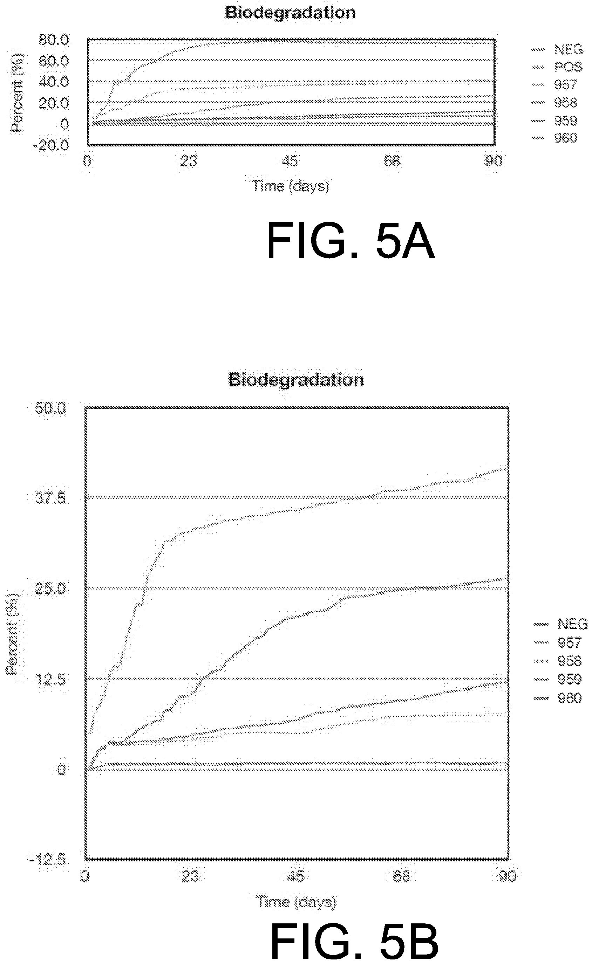

Seven samples were tested for 91 days to determine biodegradability characteristics using biomethane potential testing conducted at a temperature of about 52°C using an inoculum having about 55% by weight water and about 45% by weight organic solids, to determine the potential for anaerobic biodegradation based on methanogenesis as a percent of total methanogenesis potential. The positive control sample was cellulose and the negative control sample was untreated polyethylene. The results of sample numbers 957, 958, 959, and 960 (compositions shown in Table 13) are shown in FIGs. 5A and 5B and in Table 14.

**Table 14.**

| | **Inoculum** | **Negative** | **Positive** | **957** | **958** | **959** | **960** |
|---|---|---|---|---|---|---|---|
| **Cumulative Gas Volume (mL)** | 811.3 | 1067.4 | 8211.9 | 18074.3 | 4045.8 | 5643.8 | 10915.8 |
| **Percent CH₄ (%)** | 22.3 | 23.2 | 35.5 | 34.7 | 32.7 | 39.4 | 42.2 |
| **Volume CH₄ (mL)** | 180.6 | 248.1 | 2914.5 | 6273.2 | 1321.2 | 2224.8 | 4608.8 |
| **Mass CH₄ (g)** | 0.13 | 0.18 | 2.08 | 4.48 | 0.94 | 1.59 | 3.29 |
| **Percent CO₂ (%)** | 48.4 | 43.1 | 44.4 | 42.6 | 42.1 | 39.7 | 40.3 |
| **Volume CO₂ (mL)** | 392.4 | 460.3 | 3649.4 | 7692.5 | 1703.2 | 2238.1 | 4401.5 |
| **Mass CO₂ (g)** | 0.77 | 0.90 | 7.17 | 15.11 | 3.35 | 4.40 | 8.65 |
| **Sample Mass (g)** | 1,000 | 10 | 10 | 20.0 | 20.0 | 20 | 20 |
| **Theoretical Sample Mass (g)** | 0.0 | 8.6 | 4.2 | 17.1 | 17.1 | 17.1 | 17.1 |
| **Biodegraded Mass (g)** | 0.31 | 0.38 | 3.52 | 7.48 | 1.62 | 2.39 | 4.83 |
| **Percent Biodegraded (%)** | | 0.8 | 76.1 | 41.9 | 7.7 | 12.2 | 26.4 |
| **Adjusted Percent Biodegraded (%)** | | 1.1 | 100.0 | 55.0 | 10.1 | 16.0 | 34.7 |

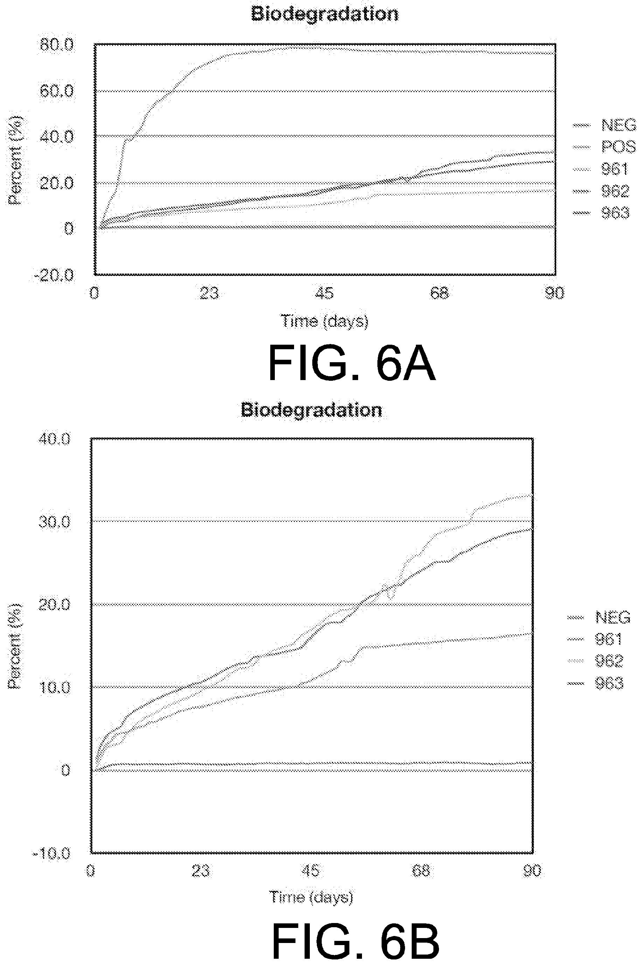

The biomethane potential testing results of sample numbers 961, 962, and 963 (compositions shown in Table 13) are shown in FIGs. 6A and 6B and in Table 15.

**Table 15.**

| | **Inoculum** | **Negative** | **Positive** | **961** | **962** | **963** |
|---|---|---|---|---|---|---|
| **Cumulative Gas Volume (mL)** | 811.3 | 1067.4 | 8211.9 | 7385.2 | 13059.8 | 11733.3 |
| **Percent CH₄ (%)** | 22.3 | 23.2 | 35.5 | 38.6 | 46.3 | 45.2 |
| **Volume CH₄ (mL)** | 180.6 | 248.1 | 2914.5 | 2849.9 | 6052.3 | 5302.2 |
| **Mass CH₄ (g)** | 0.13 | 0.18 | 2.08 | 2.04 | 4.32 | 3.79 |
| **Percent CO₂ (%)** | 48.4 | 43.1 | 44.4 | 40.9 | 39.8 | 39.6 |
| **Volume CO₂ (mL)** | 392.4 | 460.3 | 3649.4 | 3023.8 | 5197.1 | 4643.4 |
| **Mass CO₂ (g)** | 0.77 | 0.90 | 7.17 | 5.94 | 10.21 | 9.12 |
| **Sample Mass (g)** | 1,000 | 10 | 10 | 20.0 | 20.0 | 20 |
| **Theoretical Sample Mass (g)** | 0.0 | 8.6 | 4.2 | 17.1 | 17.1 | 17.1 |
| **Biodegraded Mass (g)** | 0.31 | 0.38 | 3.52 | 3.15 | 6.03 | 5.33 |
| **Percent Biodegraded (%)** | | 0.8 | 76.1 | 16.6 | 33.4 | 29.3 |
| **Adjusted Percent Biodegraded (%)** | | 1.1 | 100.0 | 21.8 | 43.9 | 38.5 |

### Example 8

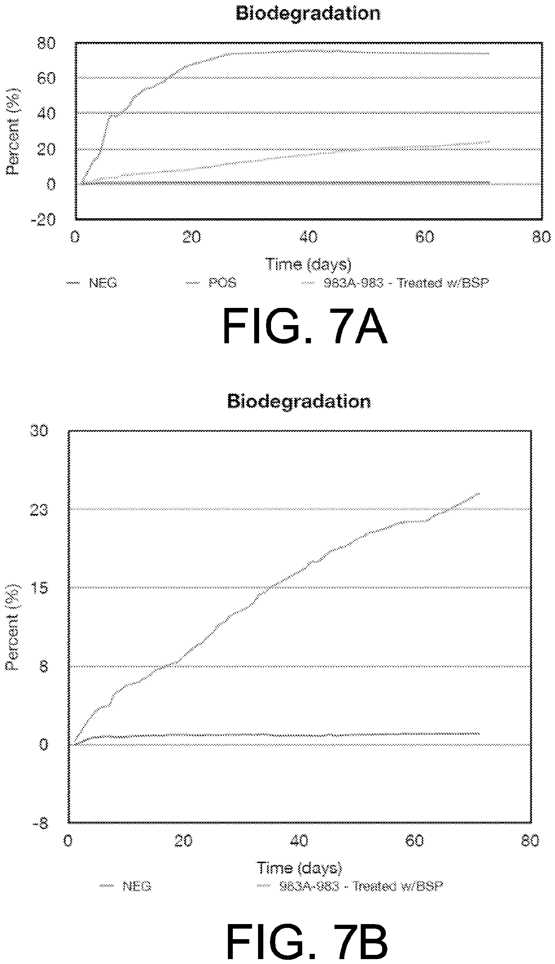

A film was tested for 71 days to determine biodegradability characteristics using biomethane potential testing conducted at a temperature of about 52°C using an inoculum having about 55% by weight water and about 45% by weight organic solids, to determine the potential for anaerobic biodegradation based on methanogenesis as a percent of total methanogenesis potential. The positive control sample was cellulose and the negative control sample was untreated polyethylene. The film contained 25% starch-based polymer material (containing 27% glycerin (99% pure), 73% starch, and <1% water); 1% biosphere additive; 5% Maleic Anhydride compatibilizer; and 69% modified LLDPE. The results of the biomethane potential testing of sample number 983 are shown in FIGs. 7A and 7B and in Table 16.

**Table 16.**

| | **Inoculum** | **Negative** | **Positive** | **983** |
|---|---|---|---|---|
| **Cumulative Gas Volume (mL)** | 1021.1 | 1326.5 | 8225.8 | 10104.5 |
| **Percent CH₄ (%)** | 26.3 | 27.4 | 35.5 | 41.7 |
| **Volume CH₄ (mL)** | 268.4 | 363.3 | 2922.7 | 4214.4 |
| **Mass CH₄ (g)** | 0.19 | 0.26 | 2.09 | 3.01 |
| **Percent CO₂ (%)** | 47.6 | 42.3 | 44.4 | 41.9 |
| **Volume CO₂ (mL)** | 485.7 | 561.2 | 3654.2 | 4230.1 |
| **Mass CO₂ (g)** | 0.95 | 1.10 | 7.18 | 8.31 |
| **Sample Mass (g)** | 1,000 | 10 | 10 | 20.0 |
| **Theoretical Sample Mass (g)** | 0.0 | 8.6 | 4.2 | 17.1 |
| **Biodegraded Mass (g)** | 0.40 | 0.50 | 3.52 | 4.52 |
| **Percent Biodegraded (%)** | | 1.1 | 73.9 | 24.0 |
| *** Adjusted Percent Biodegraded (%)** | | 1.4 | 100.0 | 32.5 |

### Example 9

Eight samples (sample numbers 957-963 and 983; compositions shown in Examples 5 and 7) were tested for 91 days to determine biodegradability characteristics using biomethane potential testing conducted at a temperature of about 52°C using an inoculum having about 55% by weight water and about 45% by weight organic solids, to determine the potential for anaerobic biodegradation based on methanogenesis as a percent of total methanogenesis potential. The positive control sample was cellulose and the negative control sample was untreated polyethylene. The results are shown in Table 17. The results shown in Table 17 indicate that samples formed from a mixture of a starch-based polymer and a polyolefin based polymer biodegrades an amount that is greater than the amount of the starch-based polymer. In some cases, the sample that biodegraded more than an amount of the starch-based polymer present was free of a biodegradation enhancing additive.

**Table 17.**

| | **% Degraded** | | | | |
|---|---|---|---|---|---|
| **Item #** | **32 Days** | **42 Days** | **62 Days** | **71 Days** | **91 Days** |
| 957 | 37.50% | | 48.40% | | 55.00% |
| 958 | 5.40% | | 8.10% | | 10.10% |
| 959 | 2.90% | | 11.30% | | 16.00% |
| 960 | 16.00% | | 30.00% | | 34.70% |
| 961 | 10.10% | | 19.40% | | 21.80% |
| 962 | 14.80% | | 26.40% | | 43.90% |
| 963 | 7.60% | | 28.10% | | 38.50% |
| 983 | | 19.20% | | 32.50% | |

### Example 10

Four samples (sample numbers 100, 200, 300, and 400) were tested for compostability using the ASTM D6400 standard at the time of filing of this patent application. The ASTM D6400 standard specifies a phytotoxicity testing procedure, indicates that the biodegradation of articles is to be measured according to the ASTM D5338-11 test, and that an elemental analysis is to utilize Table 3 of 40 C.F.R. Part 503.13. The compositions of the samples and the biodegradation portion of the compostability test results are shown in Table 18. The starch-based polymeric material was a blend of starches including 90% corn starch and 10% potato starch. The first petrochemical-based polymeric material was a linear low-density polyethylene produced using a metallocene catalyst. The compatibilizer for samples 100 and 200 was a Bynel^{®} compatibilizer from DuPont^{®} and the compatibilizer for samples 300 and 400 was an Amplify^{™} compatibilizer from Dow^{®}. The biodegradation enhancing additive for samples 100 and 200 was from Biosphere^{®} and the biodegradation enhancing additive for sample 300 was from ENSO. The second petrochemical-based polymeric material was ecoflex^{®} from BASF, which is a fossil raw materials-based plastic that is compostable according to the ASTM D6400 standard. The 98 day biodegradability results indicated the test chamber carbon dioxide measurement as a percentage of a theoretical maximum amount of carbon dioxide for the sample after 98 days. The 180 day biodegradability results indicated the test chamber carbon dioxide measurement as a percentage of a theoretical maximum amount of carbon dioxide after 180 days.

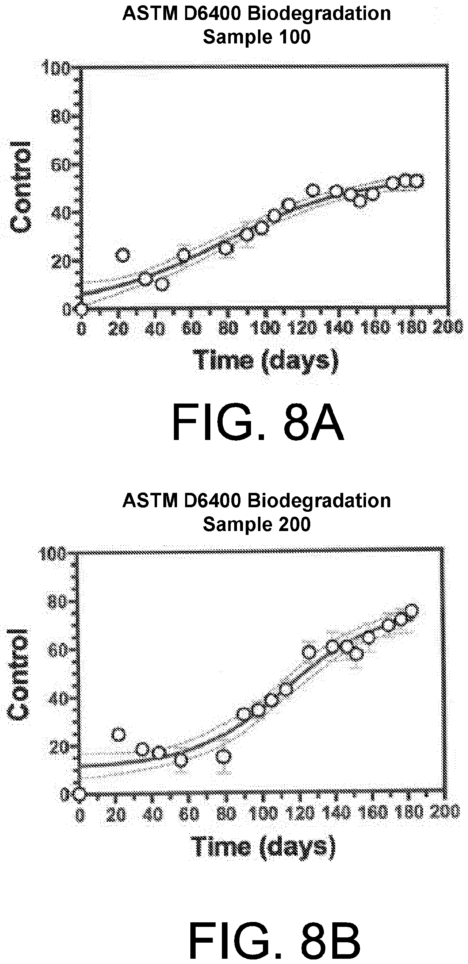

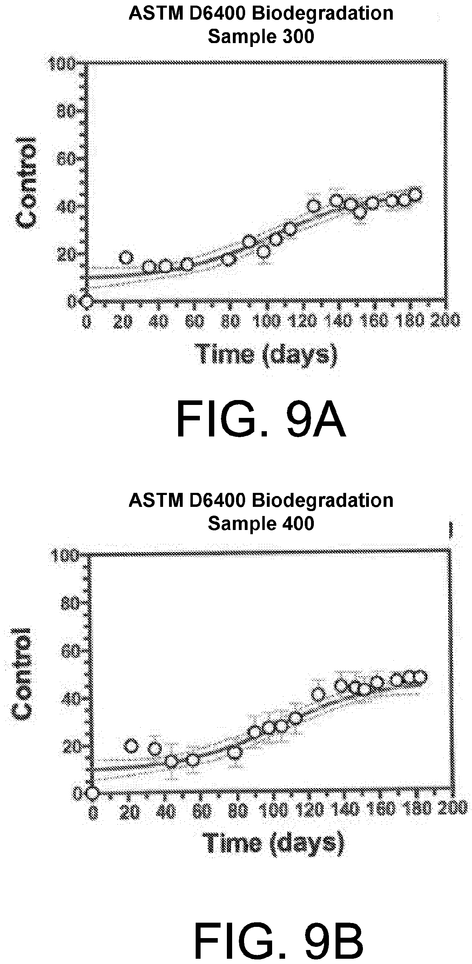

FIG. 8A shows the results of the biodegradation portion of the ASTM D6400 test performed according to ASTM D5338 for sample 100. FIG. 8B shows the results of the biodegradation portion of the ASTM D6400 test performed according to ASTM D5338 for sample 200. FIG. 9A shows the results of the biodegradation portion of the ASTM D6400 test performed according to ASTM D5338 for sample 300 and FIG. 9B shows the results of the biodegradation portion of the ASTM D6400 test performed according to ASTM D5338 for sample 400. The results of the biodegradation portion of the ASTM D6400 test indicate that, after 180 days, an amount of first petrochemical-based polymeric material in samples 100, 300, and 400 has degraded partially because the amount of carbon dioxide measured in the test chamber is greater than the percentage of the starch-based polymeric material included in these samples. Thus, at least a portion of the remainder of the carbon dioxide emissions is due to the degradation of the first petrochemical-based polymeric material. This observation includes sample 400, which is free of a biodegradation enhancing additive.

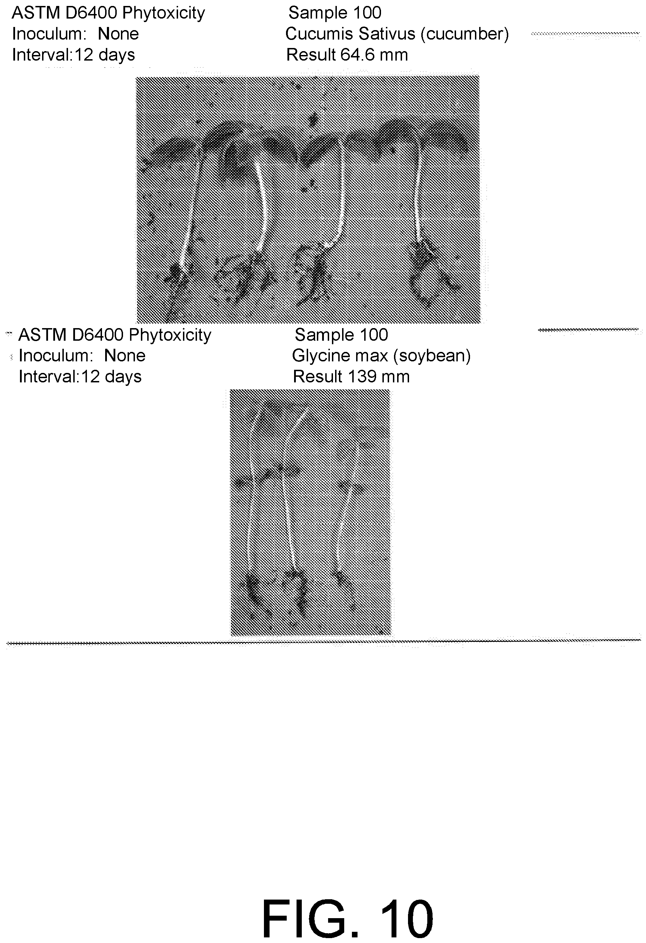

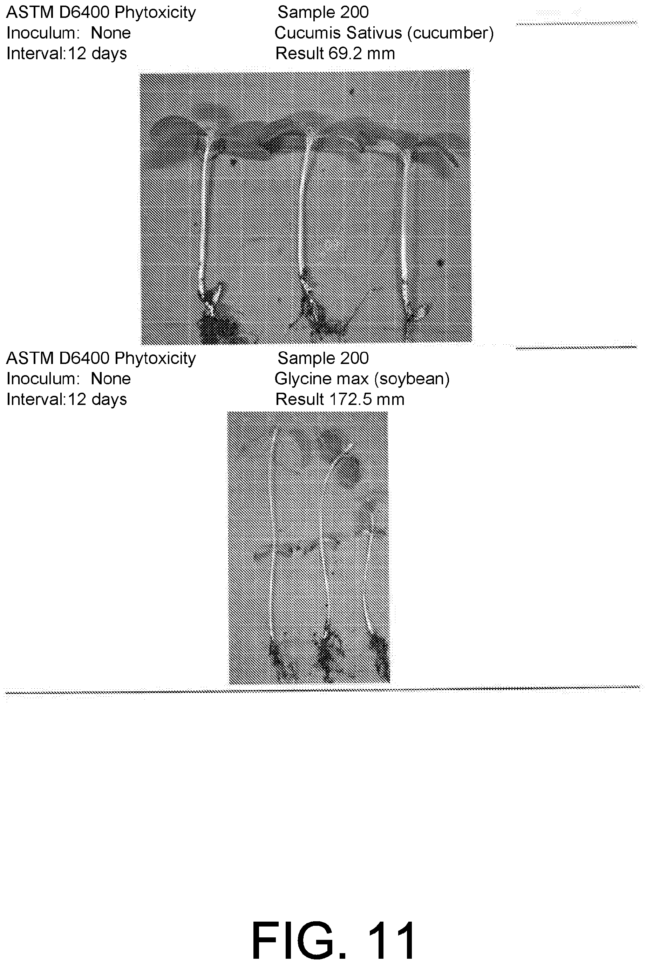

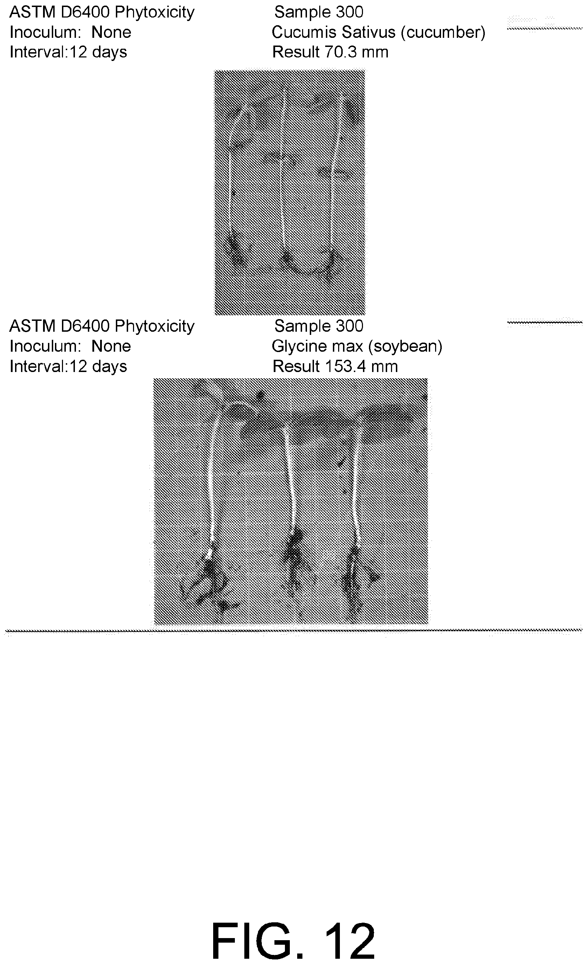

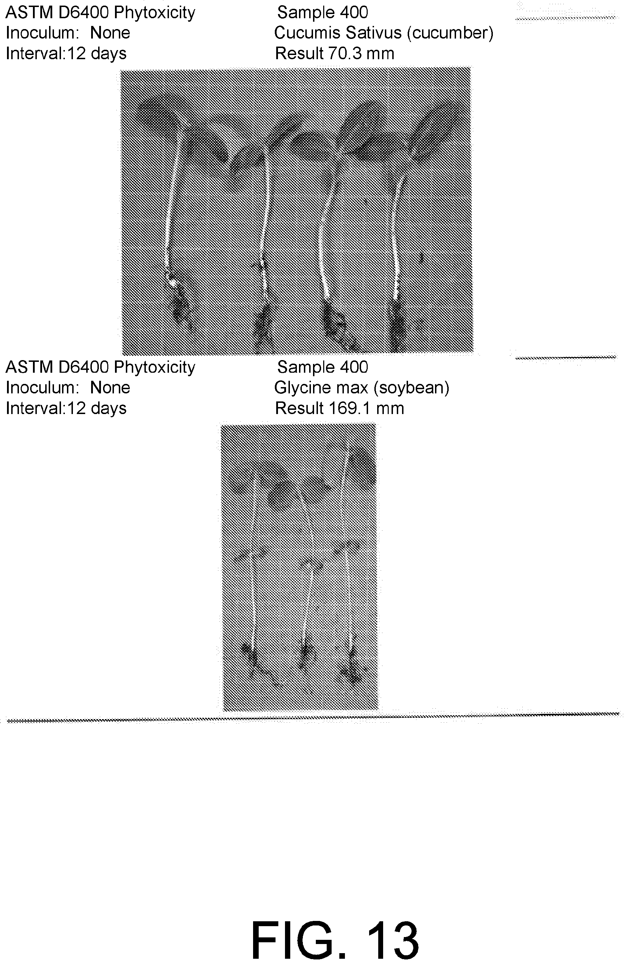

FIG. 10 shows the results of the phytotoxicity portion of the ASTM D6400 test for sample 100. FIG. 11 shows the results of the phytotoxicity portion of the ASTM D6400 test for sample 200. FIG. 12 shows the results of the phytotoxicity portion of the ASTM D6400 test for sample 300. FIG. 13 shows the results of the phytotoxicity portion of the ASTM D6400 test for sample 400. Passing the phytotoxicity portion of the ASTM D6400 test indicates that the linear low density polyethylene included in the samples was being degraded without the production of harmful byproducts.

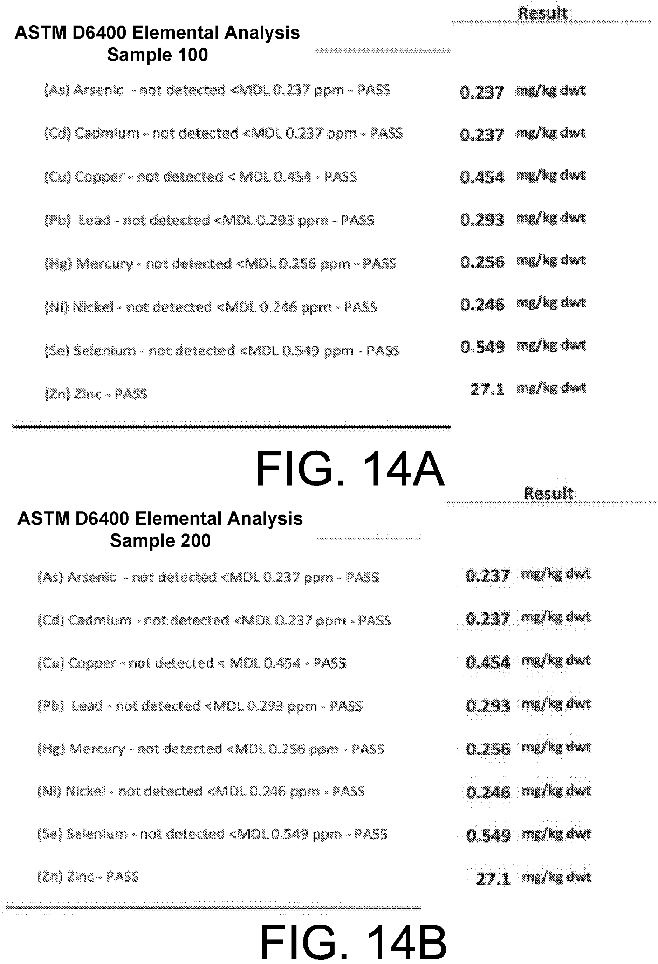

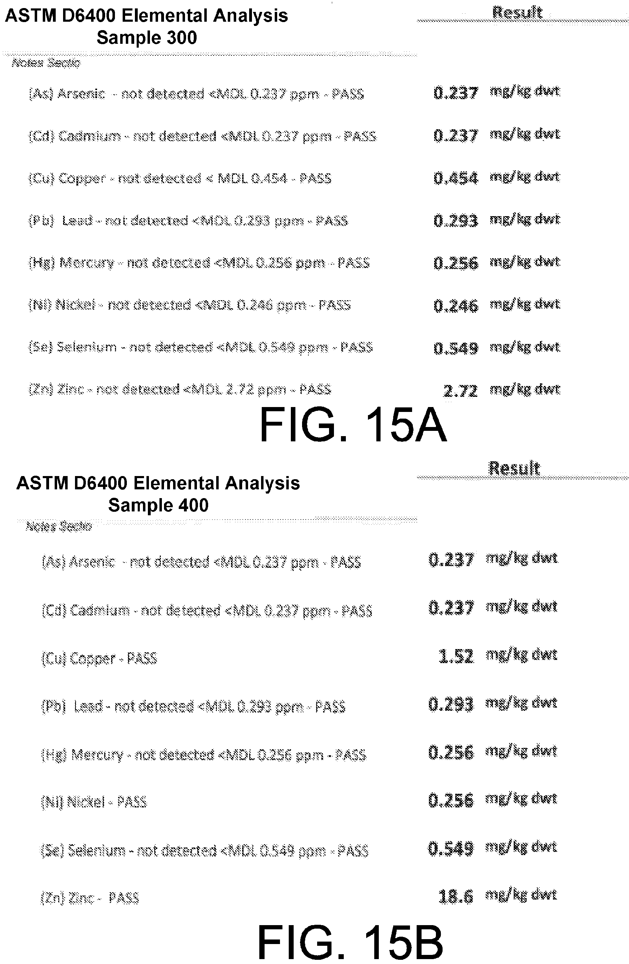

FIG. 14A shows the results of the elemental analysis portion of the ASTM D6400 test based on Table 3 of 40 C.F.R. Part 503.13 for sample 100. FIG. 14B shows the results of the elemental analysis portion of the ASTM D6400 test based on Table 3 of 40 C.F.R. Part 503.13 for sample 200. FIG. 15A shows the results of the elemental analysis portion of the ASTM D6400 test based on Table 3 of 40 C.F.R. Part 503.13 for sample 300. FIG. 15B shows the results of the elemental analysis portion of the ASTM D6400 test for sample 400. The results for the elemental analysis portion of the ASTM D6400 test based on Table 3 of 40 C.F.R. Part 503.13 also indicate the absence of harmful byproducts as the samples degraded.

**Table 18.**

| | Sample No. 100 | Sample No. 200 | Sample No. 300 | Sample No. 400 |
|---|---|---|---|---|
| Starch-Based Polymeric Material | 30% | 30% | 40% | 25% |
| First Petrochemical-Based Polymeric Material | 64% | 15% | 50% | 70% |
| Compatibilizer | 5% | 5% | 5% | 5% |
| Biodegradation Enhancing Additive | 1% | 1% | 5% | 0% |
| Second Petrochemical-Based Polymeric Material | 0% | 49% | 0% | 0% |
| Film Thickness (mm) | 0.34 | 0.34 | - | 0.44 |
| 98 Day Biodegradability Results | 33% | 29% | 20% | 22% |
| 180 Day Biodegradability Results | 55% | 74% | 45% | 48% |

## Claims

1. An article produced from a mixture of materials having:
a polymeric content comprising:
a starch-based polymeric material formed from at least a first starch and a second starch, and a plasticizer, and including no greater than 5% by weight water; and
a petrochemical-based polymeric material selected from the group consisting of a polyolefin, polystyrene, high impact polystyrene, and combinations thereof, the petrochemical-based polymeric material being present in an amount of up to 99% by weight of the mixture of materials
wherein an amount of the polymeric content that biodegrades after 91 days is greater than an amount of the starch-based polymeric material based on results of a biomethane potential test conducted according to ASTM D5511 at a temperature of 52°C using an inoculum having 55% by weight water and 45% by weight organic solids.

2. The article of claim 1, wherein substantially all of the starch-based polymeric material biodegrades after 91 days as measured according to the biomethane potential test conducted according to ASTM D5511 at a temperature of 52°C using an inoculum having 55% by weight water and 45% by weight organic solids.

3. The article of claim 1, wherein the article has an amount of biodegradation of the article after 91 days that is from 5% to 60% greater than an amount of the starch-based polymeric material based on results of the biomethane potential test conducted according to ASTM D5511 at a temperature of 52°C using an inoculum having 55% by weight water and 45% by weight organic solids.

4. The article of claim 1, wherein the starch-based polymeric material includes no greater than 2%, more preferably no greater than 1% by weight water.

5. The article of claim 1, wherein the polymeric content consists of the starch-based polymeric material and the polyolefin-based polymeric material.

6. The article of claim 1, wherein:
the first starch is derived from one of potato, corn, or tapioca;
the second starch is derived from a different one of potato, corn, or tapioca;
a first amount of the first starch comprises from 10% by weight to 25% by weight of the starch-based polymeric material; and
a second amount of the second starch comprises from 55% by weight to 85% by weight of the starch -based polymeric material.

7. The article of any preceding claim, further comprising one or more compatibilizers.

8. The article of claim 7, wherein the compatibilizer is selected from a maleic anhydride-grafted polyethylene, a maleic anhydride-grafted polypropylene, a maleic anhydride-grafted polybutene, or a combination thereof.

9. The article of any preceding claim, wherein the starch-based polymeric material is present in an amount of at least 5% by weight of the mixture of materials.

10. The article of any preceding claim, wherein the starch-based polymeric material is present in an amount of at least 10% by weight of the mixture of materials.

11. The article of any preceding claim, wherein the starch-based polymeric material is present in an amount from 10% by weight to 40% by weight of the mixture of materials.

12. The article of any preceding claim, wherein the petrochemical-based polymeric material is present in an amount of at least 50% by weight of the mixture of materials.

13. The article of any preceding claim, wherein the petrochemical-based polymeric material is present in an amount of from 50% by weight to 90% by weight of the mixture of materials.

14. A process comprising:
providing one or more petrochemical-based polymeric materials selected from the group consisting of a polyolefin, polystyrene, high impact polystyrene, and combinations thereof;
providing one or more starch-based polymeric materials formed from at least a first starch and a second starch and a plasticizer, and including no greater than 5% by weight water;
mixing the one or more petrochemical-based polymeric materials and the one or more starch-based polymeric materials to produce a mixture of materials, the one or more petrochemical-based polymeric materials being present in an amount of up to 99% by weight of the mixture of materials;
heating the mixture of materials at a temperature included in a range of 120°C to 180°C;
producing a film using the mixture of materials, wherein:
the film includes polymeric content comprised of the one or more petrochemical-based polymeric materials and the one or more starch-based polymeric materials; and
an amount of the polymeric content that biodegrades after 91 days is greater than an amount of the one or more starch-based polymeric materials based on results of a biomethane potential test conducted according to ASTM D5511 at a temperature of 52°C using an inoculum having 55% by weight water and 45% by weight organic solids.

15. The process of claim 14, wherein the mixture of materials includes:
from 1% by weight to 9% by weight of one or more compatibilizers;
from 10% by weight to 40% by weight of the one or more starch-based polymeric materials; and
from 60% by weight to 89% by weight of the one or more petrochemical-based polymeric materials.

16. The process of claim 14, further comprising producing a bag from the film, wherein the bag has a thickness from 0.02 mm to 0.05 mm and the bag includes a cavity having a volume from 5 L to 20 L.

## Patentansprüche

1. Gegenstand, hergestellt aus einem Materialgemisch, das aufweist:
einen Polymergehalt, umfassend:
ein Polymermaterial auf Stärkebasis, das aus wenigstens einer ersten Stärke und einer zweiten Stärke und einem Weichmacher gebildet ist und nicht mehr als 5 Gew.-% Wasser enthält; und
ein Polymermaterial auf petrochemischer Basis, ausgewählt aus der Gruppe bestehend aus einem Polyolefin, Polystyrol, schlagfestem Polystyrol und Kombinationen davon, wobei das Polymermaterial auf petrochemischer Basis in einer Menge von bis zu 99 Gew.-% des Materialgemischs vorhanden ist,
wobei eine Menge des Polymergehalts, die nach 91 Tagen biologisch abgebaut ist, größer als die Menge des Polymermaterials auf Stärkebasis ist, auf Grundlage von Ergebnissen einer Biomethan-Potentialprüfung, durchgeführt gemäß ASTM D5511 bei einer Temperatur von 52 °C unter Verwendung eines Inokulums mit 55 Gew.-% Wasser und 45 Gew.-% an organischen Feststoffen.

2. Gegenstand gemäß Anspruch 1, wobei im Wesentlichen das gesamte Polymermaterial auf Stärkebasis nach 91 Tagen biologisch abgebaut ist, wie gemessen gemäß der Biomethan-Potentialprüfung, durchgeführt gemäß ASTM D5511 bei einer Temperatur von 52 °C unter Verwendung eines Inokulums mit 55 Gew.-% Wasser und 45 Gew.-% an organischen Feststoffen.

3. Gegenstand gemäß Anspruch 1, wobei der Gegenstand eine Menge an Bioabbau des Gegenstands nach 91 Tagen aufweist, die von 5 % bis 60 % höher als die Menge des Polymermaterials auf Stärkebasis ist, auf Grundlage von Ergebnissen der Biomethan-Potentialprüfung, durchgeführt gemäß ASTM D5511 bei einer Temperatur von 52 °C unter Verwendung eines Inokulums mit 55 Gew.-% Wasser und 45 Gew.-% an organischen Feststoffen.

4. Gegenstand gemäß Anspruch 1, wobei das Polymermaterial auf Stärkebasis nicht mehr als 2 Gew.-%, bevorzugter nicht mehr als 1 Gew.-%, Wasser enthält.

5. Gegenstand gemäß Anspruch 1, wobei der Polymergehalt aus dem Polymermaterial auf Stärkebasis und dem Polymermaterial auf Polyolefinbasis besteht.

6. Gegenstand gemäß Anspruch 1, wobei:
die erste Stärke aus einem von Kartoffeln, Mais und Tapioka abgeleitet ist;
die zweite Stärke aus einem anderen von Kartoffeln, Mais und Tapioka abgeleitet ist;
eine erste Menge der ersten Stärke von 10 Gew.-% bis 25 Gew.-% des Polymermaterials auf Stärkebasis umfasst; und
eine zweite Menge der zweiten Stärke von 55 Gew.-% bis 85 Gew.-% des Polymermaterials auf Stärkebasis umfasst.

7. Gegenstand gemäß einem der vorstehenden Ansprüche, ferner umfassend einen oder mehrere Verträglichmacher.

8. Gegenstand gemäß Anspruch 7, wobei der Verträglichmacher ausgewählt ist aus einem Maleinsäureanhydrid-gepfropften Polyethylen, einem Maleinsäureanhydrid-gepfropften Polypropylen, einem Maleinsäureanhydrid-gepfropften Polybuten und einer Kombination davon.

9. Gegenstand gemäß einem der vorstehenden Ansprüche, wobei das Polymermaterial auf Stärkebasis in einer Menge von wenigstens 5 Gew.-% des Materialgemischs vorhanden ist.

10. Gegenstand gemäß einem der vorstehenden Ansprüche, wobei das Polymermaterial auf Stärkebasis in einer Menge von wenigstens 10 Gew.-% des Materialgemischs vorhanden ist.

11. Gegenstand gemäß einem der vorstehenden Ansprüche, wobei das Polymermaterial auf Stärkebasis in einer Menge von 10 Gew.-% bis 40 Gew.-% des Materialgemischs vorhanden ist.

12. Gegenstand gemäß einem der vorstehenden Ansprüche, wobei das Polymermaterial auf petrochemischer Basis in einer Menge von wenigstens 50 Gew.-% des Materialgemischs vorhanden ist.

13. Gegenstand gemäß einem der vorstehenden Ansprüche, wobei das Polymermaterial auf petrochemischer Basis in einer Menge von 50 Gew.-% bis 90 Gew.-% des Materialgemischs vorhanden ist.

14. Verfahren, umfassend:
Bereitstellen eines oder mehrerer Polymermaterialien auf petrochemischer Basis ausgewählt aus der Gruppe bestehend aus einem Polyolefin, Polystyrol, schlagfestem Polystyrol und Kombinationen davon;
Bereitstellen eines oder mehrerer Polymermaterialien auf Stärkebasis, das aus wenigstens einer ersten Stärke und einer zweiten Stärke und einem Weichmacher gebildet ist und nicht mehr als 5 Gew.-% Wasser enthält;
Mischen des einen oder der mehreren Polymermaterialien auf petrochemischer Basis und des einen oder der mehreren Polymermaterialien auf Stärkebasis, um ein Materialgemisch zu erhalten, wobei das eine oder die mehreren Polymermaterialien auf petrochemischer Basis in einer Menge von bis zu 99 Gew.-% des Materialgemischs vorhanden sind;
Erhitzen des Materialgemischs auf eine Temperatur in dem Bereich von 120 °C bis 180 °C;
Herstellen eines Films unter Verwendung des Materialgemischs, wobei:
der Film einen Polymergehalt enthält, der aus dem einen oder den mehreren Polymermaterialien auf petrochemischer Basis und dem einen oder den mehreren Polymermaterialien auf Stärkebasis besteht; und
eine Menge des Polymergehalts, die nach 91 Tagen biologisch abgebaut ist, größer als die Menge des einen oder der mehreren Polymermaterialien auf Stärkebasis ist, auf Grundlage von Ergebnissen einer Biomethan-Potentialprüfung, durchgeführt gemäß ASTM D5511 bei einer Temperatur von 52 °C unter Verwendung eines Inokulums mit 55 Gew.-% Wasser und 45 Gew.-% an organischen Feststoffen.

15. Verfahren gemäß Anspruch 14, wobei das Materialgemisch enthält:
von 1 Gew.-% bis 9 Gew.-% an einem oder mehreren Verträglichmachern;
von 10 Gew.-% bis 40 Gew.-% an dem einen oder den mehreren Polymermaterialien auf Stärkebasis; und
von 60 Gew.-% bis 89 Gew.-% an dem einen oder den mehreren Polymermaterialien auf petrochemischer Basis.

16. Verfahren gemäß Anspruch 14, ferner umfassend Herstellen eines Beutels aus dem Film, wobei der Beutel eine Dicke von 0,02 mm bis 0,05 mm aufweist und der Beutel einen Hohlraum mit einem Volumen von 5 l bis 20 l einschließt.

## Revendications

1. Article produit à partir d'un mélange de matériaux ayant :
un contenu polymérique comprenant :
un matériau polymérique à base d'amidon formé à partir d'au moins un premier amidon et un deuxième amidon, et d'un plastifiant, et ne comprenant pas plus de 5 % en poids d'eau ; et
un matériau polymérique à base de composé pétrochimique choisi dans le groupe constitué par une polyoléfine, un polystyrène, un polystyrène à impact élevé, et des combinaisons correspondantes, le matériau polymérique à base de composé pétrochimique étant présent en une quantité allant jusqu'à 99 % en poids du mélange de matériaux
une quantité du contenu polymérique qui se biodégrade après 91 jours étant supérieure à une quantité du matériau polymérique à base d'amidon sur la base de résultats d'un test de potentiel de biométhane conduit selon la norme ASTM D5511 à une température de 52 °C en utilisant un inoculum ayant 55 % en poids d'eau et 45 % en poids de solides organiques.

2. Article selon la revendication 1, sensiblement tout le matériau polymérique à base d'amidon se biodégradant après 91 jours comme mesuré selon le test de potentiel de biométhane conduit selon la norme ASTM D5511 à une température de 52 °C en utilisant un inoculum ayant 55 % en poids d'eau et 45 % en poids de solides organiques.

3. Article selon la revendication 1, l'article ayant une quantité de biodégradation de l'article après 91 jours qui est 5 % à 60 % plus grande qu'une quantité du matériau polymérique à base d'amidon sur la base de résultats d'un test de potentiel de biométhane conduit selon la norme ASTM D5511 à une température de 52 °C en utilisant un inoculum ayant 55 % en poids d'eau et 45 % en poids de solides organiques.

4. Article selon la revendication 1, le matériau polymérique à base d'amidon ne comprenant pas plus de 2 %, plus préférablement pas plus de 1 % en poids d'eau.

5. Article selon la revendication 1, le contenu polymérique étant constitué du matériau polymérique à base d'amidon et du matériau polymérique à base de polyoléfine.

6. Article selon la revendication 1,
le premier amidon étant issu de l'un parmi la pomme de terre, le maïs et le tapioca ;
le deuxième amidon étant issu d'un différent parmi la pomme de terre, le maïs et le tapioca ;
une première quantité du premier amidon comprenant de 10 % en poids à 25 % en poids du matériau polymérique à base d'amidon ; et
une deuxième quantité du deuxième amidon comprenant de 55 % en poids à 85 % en poids du matériau polymérique à base d'amidon.

7. Article selon une quelconque revendication précédente, comprenant en outre un ou plusieurs agents de compatibilité.

8. Article selon la revendication 7, l'agent de compatibilité étant choisi parmi un polyéthylène greffé avec de l'anhydride maléique, un polypropylène greffé avec de l'anhydride maléique, un polybutène greffé avec de l'anhydride maléique, et une combinaison correspondante.

9. Article selon une quelconque revendication précédente, le matériau polymérique à base d'amidon étant présent en une quantité d'au moins 5 % en poids du mélange de matériaux.

10. Article selon une quelconque revendication précédente, le matériau polymérique à base d'amidon étant présent en une quantité d'au moins 10 % en poids du mélange de matériaux.

11. Article selon une quelconque revendication précédente, le matériau polymérique à base d'amidon étant présent en une quantité de 10 % en poids à 40 % en poids du mélange de matériaux.

12. Article selon une quelconque revendication précédente, le matériau polymérique à base de composé pétrochimique étant présent en une quantité d'au moins 50 % en poids du mélange de matériaux.

13. Article selon une quelconque revendication précédente, le matériau polymérique à base de composé pétrochimique étant présent en une quantité allant de 50 % en poids à 90 % en poids du mélange de matériaux.

14. Procédé comprenant :
la mise à disposition d'un ou de plusieurs matériaux polymériques à base de composé pétrochimique choisis dans le groupe constitué par une polyoléfine, un polystyrène, un polystyrène à impact élevé, et des combinaisons correspondantes ;
la mise à disposition d'un ou de plusieurs matériaux polymériques à base d'amidon formés à partir d'au moins un premier amidon et un deuxième amidon et d'un plastifiant, et ne comprenant pas plus de 5 % en poids d'eau ;
le mélange du ou des matériaux polymériques à base de composé pétrochimique et du ou des matériaux polymériques à base d'amidon pour produire un mélange de matériaux, le ou les matériaux polymériques à base de composé pétrochimique étant présents en une quantité allant jusqu'à 99 % en poids du mélange de matériaux ;
le chauffage du mélange de matériaux à une température comprise dans une plage de 120 °C à 180 °C ;
la production d'un film en utilisant le mélange de matériaux,
le film comprenant un contenu polymérique composé du ou des matériaux polymériques à base de composé pétrochimique et du ou des matériaux polymériques à base d'amidon ; et
une quantité du contenu polymérique qui se biodégrade après 91 jours étant supérieure à une quantité du ou des matériaux polymériques à base d'amidon sur la base de résultats d'un test de potentiel de biométhane conduit selon la norme ASTM D5511 à une température de 52 °C en utilisant un inoculum ayant 55 % en poids d'eau et 45 % en poids de solides organiques.

15. Procédé selon la revendication 14, le mélange de matériaux comprenant :
de 1 % en poids à 9 % en poids d'un ou de plusieurs agents de compatibilité ;
de 10 % en poids à 40 % en poids du ou des matériaux polymériques à base d'amidon ; et
de 60 % en poids à 89 % en poids du ou des matériaux polymériques à base de composé pétrochimique.

16. Procédé selon la revendication 14, comprenant en outre la production d'un sac à partir du film, le sac ayant une épaisseur de 0,02 mm à 0,05 mm et le sac comprenant une cavité ayant un volume de 5 L à 20 L.
